# EUROPEAN PATENT SPECIFICATION

(11) **EP 2 122 845 B1**
(45) Date of publication and mention of the grant of the patent: **08.07.2015**
(21) Application number: 08710363.6
(22) Date of filing: 12.02.2008
(51) Int. Cl.: H04B 3/54

(54) **POWER LINE COMMUNICATION APPARATUS, REGISTRATION STATUS CONFIRMATION METHOD, AND POWER LINE COMMUNICATION SYSTEM**
NETZLEITUNGSNACHRICHTENÜBERTRAGUNGSGERÄT, REGISTRIERUGNSTATUSBESTÄTIGUNGSVERFAHREN UND NETZLEITUNGSNACHRICHTENÜBERTRAGUNGSSYSTEM
APPAREIL DE COURANTS PORTEURS EN LIGNE, PROCÉDÉ DE CONFIRMATION D'ÉTAT D'ENREGISTREMENT ET SYSTÈME DE COURANTS PORTEURS EN LIGNE

(30) Priority: 13.02.2007 JP 2007032113
(43) Date of publication of application: 25.11.2009
(73) Proprietor: Panasonic Corporation, Kadoma-shi Osaka 571-8501 (JP)
(72) Inventor: KOGA, Hisao, Osaka 540-6207 (JP)
(74) Representative: Eisenführ Speiser
(86) International application number: PCT/JP2008/000209
(87) International publication number: WO 2008/099601

(56) References cited:
- EP-A- 1 835 634
- US-A1- 2003 043 028
- US-A1- 2006 038 660

## Description

### Technical Field

The present invention relates to a power line communication apparatus, a registration status confirmation method, and a power line communication system.

### Background Art

US 2006/0038660 A1 discloses a method and apparatus for protecting privacy in power line communication (PLC) networks. Data transmitted on a PLC network is encrypted according to a network key and can be properly received only by registered devices that have the power network ID and network key value so that power decryption can be performed. According to US 2006/0038660 A1 a streaming media device is provided with a compatible network ID and network key during a registration process facilitated by coupling the device (applicant) to a direct power line connection associated with another device (administrator). The network key and optionally network ID are then shared over the direct connection without being distributed over the PLC network at large. By way of example, the data is prevented from being distributed across the PLC network in response to using selectable filtering of PLC data, and preferably a secure data communication mechanism, such as public-private key encoding. US 200310043028 A1 is related to a home network system. A receptacle is provided with insertion detecting means for detecting the connection of a device, a memory for storing therein a house code, and a power line superposition communication means for superposing the house code on a power line. The house code is automatically set in the device when the device is connected to the receptacle.

With power line communication apparatuses performing power line communications using a power line, a process for making a power line communication apparatus ready for communications (hereinafter referred to as an authentication process) is performed in order to ensure secure and reliable communications between two or more power line communication apparatuses. Examples of the authentication process include authentication and a security setting process.

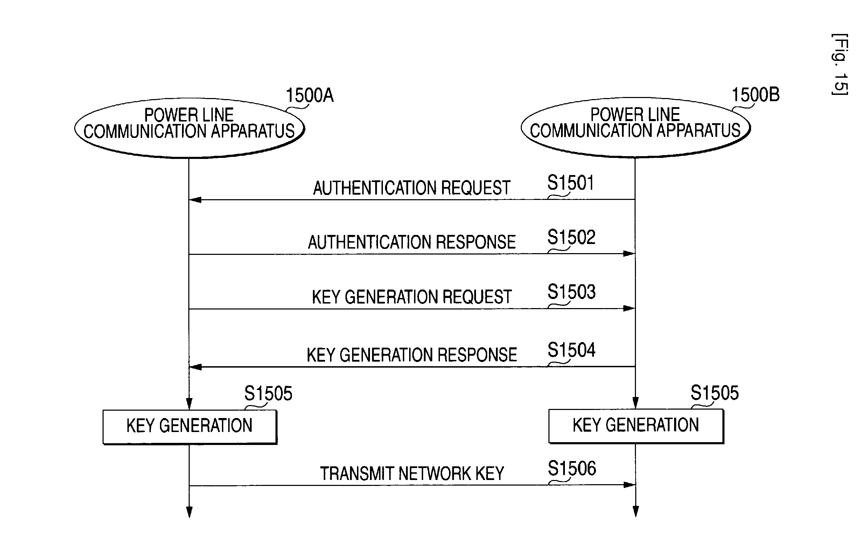

A general authentication process will be briefly described using Fig. 15. This example assumes that an authentication process is performed between a power line communication apparatus 1500A and a power line communication apparatus 1500B, with the power line communication apparatus 1500A managing the authentication process. When the power line communication apparatus 1500B issues an authentication request to the power line communication apparatus 1500A (step S1501), an authentication response is returned from the power line communication apparatus 1500A (step S1502). In case the authentication request is permitted, the power line communication apparatus 1500A makes a request for a key (step S1503) to the power line communication apparatus 1500B and the power line communication apparatus 1500B makes a response for a key to the power line communication apparatus 1500A (step S1504). To make a request or a response for a key, various information that is known to only these power line communication apparatuses, such as a random number generated according to a MAC address inherent to a modem or a time stamp, is transmitted to each other. The power line communication apparatuses 1500A and 1500B generate a key based on various information transmitted to each other (step S1505). The power line communication apparatus 1500A uses the generated key to transmit a network key shared in a network to other power line communication apparatuses constituting the network (step S1506).

Another example of the authentication process is a cryptographic key setup process in a wireless LAN environment. In wireless LAN, a cryptographic key setup process to add a new terminal that uses the network by way of a simple method is known as a cryptographic key setup method to perform a cryptographic process. The cryptographic key setup method performs a cryptographic key setup process by arranging a target terminal within the coverage area of an access point as a repeater for wireless LAN and pressing a one-touch registration button at each of the access point and the terminal (for example, refer to Patent Citation 1). Patent Citation 1: JP-A-2005-175524

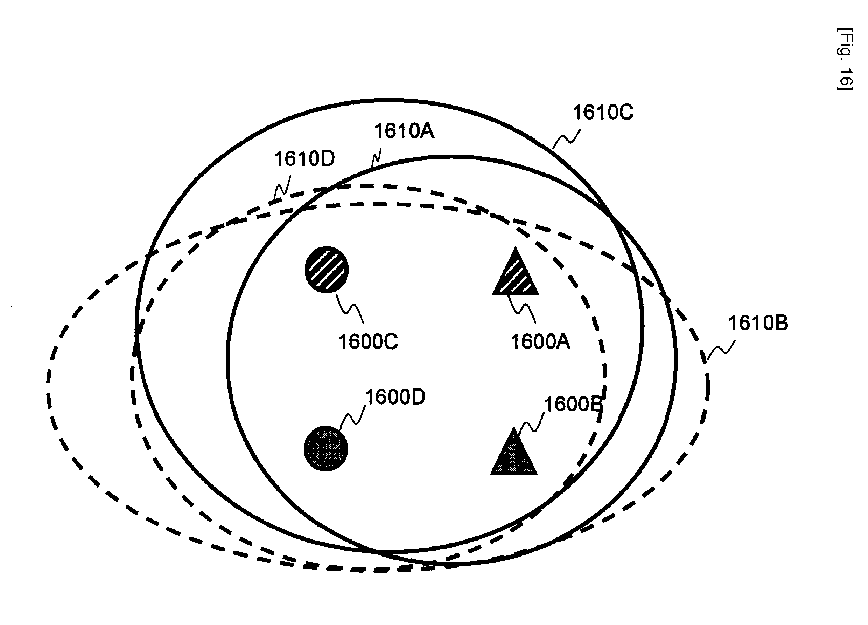

When a power line communication apparatus is plugged into an outlet and an authentication process is made, a power line network with another power line communication apparatus can be configured. A plurality of power line networks can be configured in the same coverage area. For example, in the environment shown in Fig. 16 are arranged a power line network 1610A to which a power line communication apparatus 1600A is connected, a power line network 1610B to which a power line communication apparatus 1600B is connected, a power line network 1610C to which a power line communication apparatus 1600C is connected, and a power line network 1610D to which a power line communication apparatus 1600D is connected. Fig. 16 shows an example of a network environment where general power line communication apparatuses are arranged.

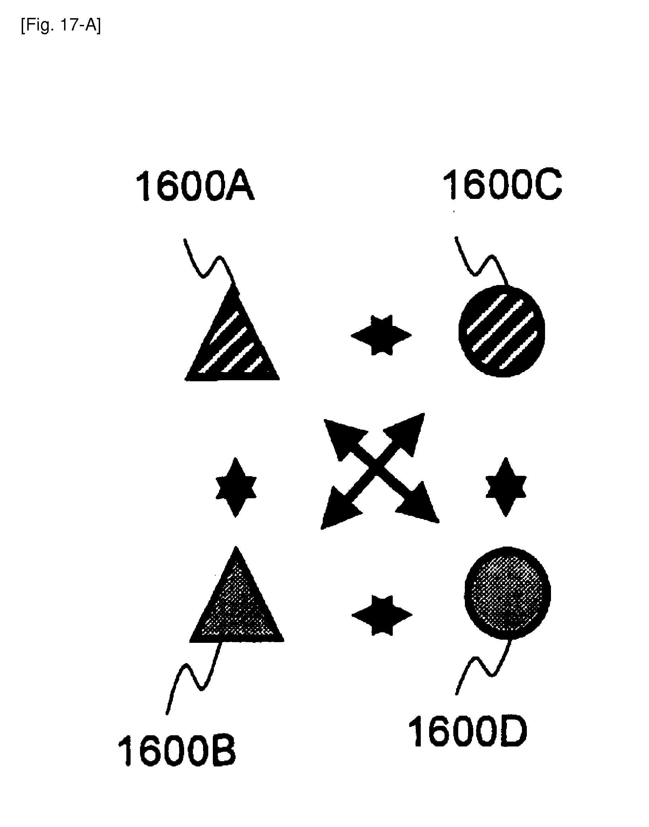

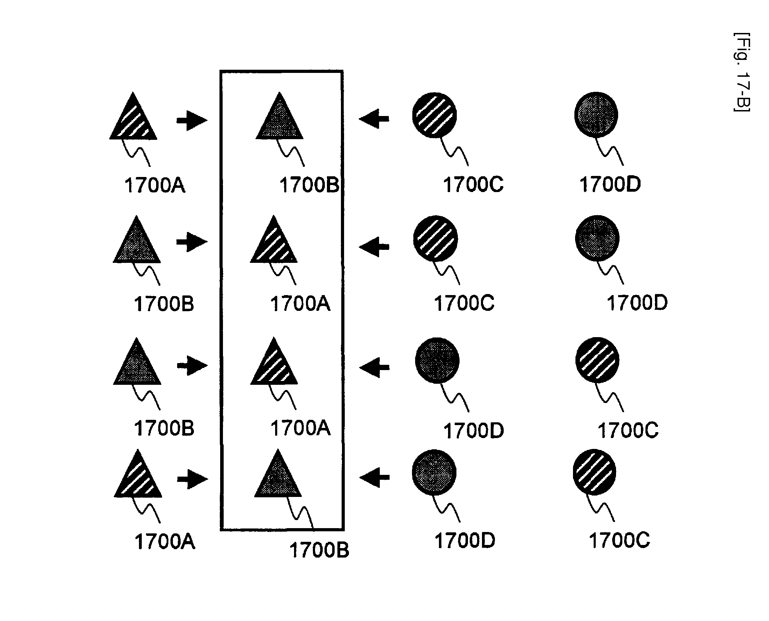

In such an environment including various power line networks, it is sometimes difficult for a power line communication apparatus to correctly perform an authentication process with another power line communication apparatus in an attempt to configure a new power line network. For example, in the environment shown in Fig. 17-A, the power line communication apparatus 1600A can perform an authentication process with any one of the power line communication apparatuses 1600B, 1600C and 1600D. In the environment shown in Fig. 17-B, in case an authentication process is performed between the power line communication apparatus 1700A and the power line communication apparatus 1700B, the power line communication apparatus 1700A can detect the power line communication apparatus 1700B but it is unknown whether the power line communication apparatus 1700B can detect the power line communication apparatus 1700A. Thus, the power line communication apparatus 1700A may fail to correctly perform an authentication process with the power line communication apparatus 1700B. Fig. 17-A and Fig. 17-B show examples of a coverage area assumed when general power line communication apparatuses communicate with each other.

In an authentication process between power line communication apparatuses, it is desirable that an exclusive authentication process be reliably performed between desired power line communication apparatuses even in the environment shown in Fig. 17-A or 17-B. It is also desirable to be able to confirm whether an authentication process has been reliably performed between desired power line communication apparatuses.

### Disclosure of Invention

The invention has been accomplished to solve the above problems. An object of the invention is to provide a power line communication apparatus, a power line communication system and a registration status confirmation method capable of more correctly confirming that an authentication process has been performed between desired power line communication apparatuses even in case a plurality of power line communication apparatuses are connected to a power line. Another object of the invention is to provide a power line communication apparatus, a power line communication system, a registration status confirmation method, and an authentication process method capable of reliably performing an authentication process between desired power line communication apparatuses even in case a plurality of power line communication apparatuses are connected to a power line.

Described below is a power line communication apparatus capable of performing power line communications with an other power line communication apparatus, the power line communication apparatus, having the features as defined in claim 1 or claim 5.

With this configuration, it is possible to confirm that an authentication process has been reliably performed by desired power line communication apparatuses even in case a plurality of power line communication apparatuses are connected to a power line.

Described below is a registration status confirmation method for confirming a registration status between power line communication apparatuses performing power line communications via a power line, the method having the features as defined in claim 7 or 8.

With this configuration, it is possible to confirm that an authentication process has been reliably performed between desired power line communication apparatuses even in case a plurality of power line communication apparatuses are connected to a power line. By indicating that an authentication process has been performed between power line communication apparatuses for example by way of an LED, it is possible to confirm that an authentication process has been appropriately performed with a power line communication apparatus as a source of a registration status confirmation signal.

With this configuration, it is possible to confirm that an authentication process has been reliably performed by desired power line communication apparatuses even in case a plurality of power line communication apparatuses are connected to a power line.

With the invention, it is possible to confirm that an authentication process has been reliably performed by desired power line communication apparatuses in case a plurality of power line communication apparatuses are connected to a power line. It is also possible to reliably perform an authentication process between desired power line communication apparatuses in case a plurality of power line communication apparatuses are connected to a power line.

### Brief Description of the Drawings

[fig.1]Fig. 1 is an external perspective view of the front of a PLC modem according to an embodiment of the invention.
[fig.2]Fig. 2 is an external perspective view of the rear of the PLC modem according to the embodiment of the invention.
[fig.3]Fig. 3 shows an example of a hardware of the PLC modem according to the embodiment of the invention.
[fig.4]Fig. 4 shows an example of a frequency diversity signal used by the PLC modem according to the embodiment of the invention.
[fig.5]Fig. 5 shows an example of a time diversity signal used by the PLC modem according to the embodiment of the invention.
[fig.6]Fig. 6 shows an example of a frequency-time diversity signal used by the PLC modem according to the embodiment of the invention.
[fig.7]Fig. 7 shows an example of the data frame structure according to the embodiment of the invention.
[fig.8]Fig. 8 shows an example of the operation flow of the PLC modem functioning as a master unit in an authentication process according to the embodiment of the invention.
[fig.9]Fig. 9 shows an example of the operation flow of the PLC modem functioning as a slave unit in an authentication process according to the embodiment of the invention.
[fig.10-A]Fig. 10-A shows the relationship between the setup period and the monitoring period according to the embodiment of the invention.
[fig.10-B]Fig. 10-B shows an example of the operation flow of a PLC modem in an authentication process using a monitoring period according to the embodiment of the invention.
[fig.10-C]Fig. 10-C shows an example of an authentication process on a time axis performed by PLC modems using a monitoring period according to the embodiment of the invention.
[fig.11]Fig. 11 shows an example of the operation of a PLC modem in an authentication process using a monitoring period according to the embodiment of the invention.
[fig.12]Fig. 12 shows an example of the operation of a PLC modem to change the setup period according to the embodiment of the invention.
[fig.13]Fig. 13 shows an example of the operation of a PLC modem that has detected a setup disable signal according to the embodiment of the invention.
[fig.14-A]Fig. 14-A shows an example of the operation of a PLC modem transmitting a registration confirmation signal according to the embodiment of the invention.
[fig.14-B]Fig. 14-B shows an example of the operation of a PLC modem receiving a registration confirmation signal according to the embodiment of the invention.
[fig.15]Fig. 15 shows a procedure for a general authentication process.
[fig.16]Fig. 16 shows an example of a network environment where general power line communication apparatuses are arranged.
[fig.17-A]Fig. 17-A shows an example of a coverage area assumed when general power line communication apparatuses communicate with each other.
[fig.17-B]Fig. 17-B shows an example of a coverage area assumed when general power line communication apparatuses communicate with each other.

### Best Mode for Carrying Out the Invention

A power line communication apparatus according to this embodiment will be described using figures.

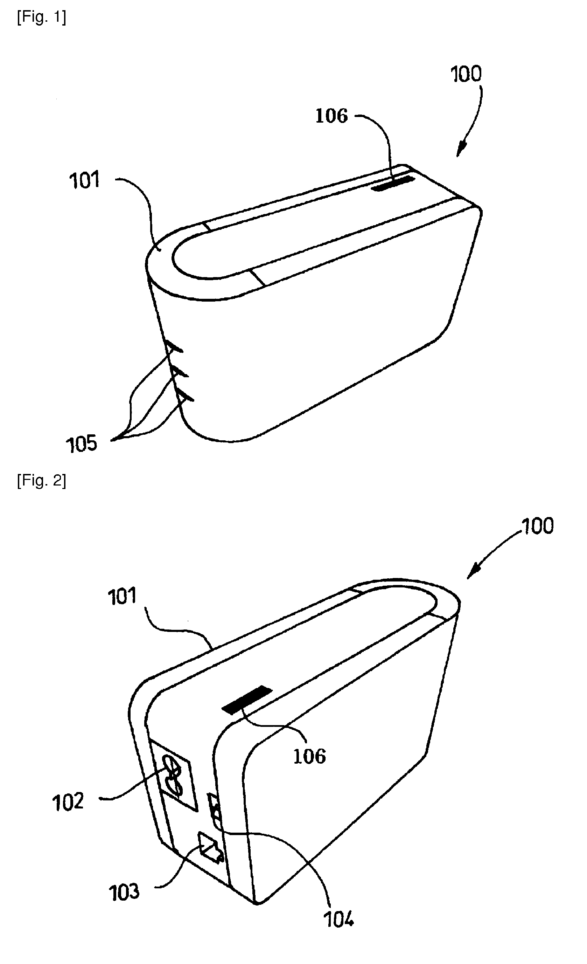

Fig. 1 is an external perspective view of the front of a PLC (Power Line Communication) modem 100 as an example of the power line communication apparatus. Fig. 2 is an external perspective view of the rear of the PLC modem 100. The PLC modem 100 shown in Figs. 1 and 2 includes an enclosure 101. On the front of the enclosure 101 is arranged an indicator 105 such as an LED (Light Emitting Diode) as shown in Fig. 1.

On the rear of the enclosure 101 are arranged a power connector 102, a LAN (Local Area Network) modular jack 103 such as RJ45, and a selector switch 104 to select among operation modes, as shown in Fig. 2.

On the upper surface of the enclosure 101 is arranged a button 106. The button 106 functions as an authentication confirmation button for confirming whether correct authentication and security setting (hereinafter referred to as an authentication process) has been made and as a setup button to start the authentication process. While the button 106 is arranged on the upper surface of the enclosure 101 in this example, the position of the button 106 is not limited thereto. The authentication confirmation button or the setup button are examples of an "operation part".

To the power connector 102 is connected a power cable (not shown). To the modular jack 103 is connected a LAN cable (not shown). The PLC modem 100 may further include a D-sub (D-subminiature) connector to connect a D-sub cable.

While the PLC modem 100 is shown as an example of the power line communication apparatus, a power line communication apparatus may be electrical apparatus including a built-in PLC modem. Electrical apparatus includes, for example, a household electrical appliance such as a television set, a telephone set, a videocassette recorder, or a set-top box and OA equipment such as a personal computer, a facsimile, and a printer.

The PLC modem 100 is connected to a power line 700 and constitutes a power line communication system together with other PLC modems.

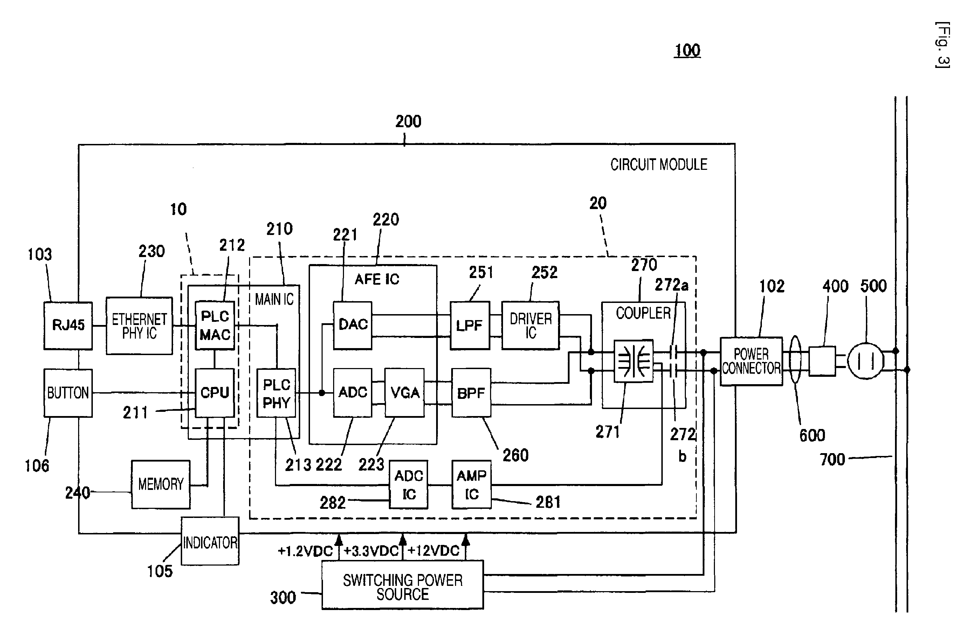

Next, an example of the hardware of the PLC modem 100 is shown in Fig. 3. The PLC modem 100 includes a circuit module 200 and a switching power source 300. The switching power source 300 is designed to supply various voltages (such as +1.2V, +3.3V and +12V) to a circuit module 200. The switching power source 300 includes, for example, a switching transformer and a DC--DC converter (either not shown).

The circuit module 200 includes a main IC (Integrated Circuit) 210, an AFE IC (Analog Front End Integrated Circuit) 220, an Ethernet PHY IC (Physical Layer Integrated Circuit) 230, a memory 240, a low-pass filter (LPF) 251, a driver IC 252, a band-pass filter (BPF) 260, a coupler 270, an AMP (Amplifier) IC 281, and an ADC (A/D converter) IC 282. The switching power source 300 and the coupler 270 are connected to a power connector 102 and connected to the power line 700 via a power cable 600, a power plug 400 and an outlet 500. The main IC functions as a control circuit for performing power line communications.

The main IC 210 is composed of a CPU (Central Processing Unit) 211, a PLC MAC (Power Line Communication Media Access Control layer) block 212 and a PLC PHY (Power Line Communication Physical layer) block 213.

The CPU 211 mounts a 32-bit RISC (Reduced Instruction Set Computer) processor. The PLC MAC block 212 manages the MAC layer (Media Access Control layer) of a transmit/receive signal. The PLC PHY block 213 manages the PHY layer (Physical layer) of a transmit/receive signal.

The AFE IC 220 is composed of a DAC (D/A Converter) 221, an ADC (A/D Converter) 222, and a VGA (Variable Gain Amplifier) 223. The coupler 270 is composed of a coil transformer 271 and coupling capacitors 272a, 272b.

The CPU 211 uses the data stored in the memory 240 to control the operation of the PLC MAC block 212 and the PLC PHY block 213 as well controls the entire PLC modem 100. The memory 240 stores processing programs of the CPU, a device registration list 241 described later, and various types of process information. The memory 240 is a "device registration storage" and an example of the "process information recording part".

Communications by the PLC modem 100 are generally made in the following way. Data inputted from the modular jack 103 is transmitted to the main IC 210 via the Ethernet PHY IC 230 and is then subjected to digital signal processing to generate a digital transmit signal. The digital transmit signal thus generated is converted to an analog signal by way of the D/A converter (DAC) 221 of the AFE IC 220 and outputted to the power line 700 via the low-pass filter 251, the driver IC 252, the coupler 270, the power connector 102, the power cable 600, the power plug 400, and the outlet 500.

The signal received from the power line 700 is transmitted to the band-pass filter 260 via the coupler 270, subjected to gain adjustment by the Variable Gain Amplifier (VGA) 223 of the AFE IC 220, and then converted to a digital signal by the A/D Converter (ADC) 222. The resulting digital signal is transmitted to the main IC 210 and converted to digital data by way of digital signal processing. The digital data thus obtained is outputted from the modular jack 103 via the Ethernet PHY IC 230.

The functions of the PLC modem 100 will be described. The CPU 211 and the PLC MAC block 212 function as a controller 10. The PLC PHY block 213, the AFE IC 220, the LPF 251, the driver IC 252, the BPF 260, and the coupler 270 function as a communication part 20.

The communication part 20 performs various types of communications with another PLC modem 100 on the network. The communication part 20 has functions of a "signal transmitting part" for transmitting a predetermined signal and a "signal receiving part" for receiving a predetermined signal. The controller 10 performs various controls on the entire PLC modem 100, as well as detects a push on a button, monitors a signal transmitted/received by the communication part 20 during communications with another terminal, and changes the setup period described later, etc. The controller 10 has functions of a "registration confirmation processing part" for performing registration confirmation for an authentication process with another PLC modem 100 and an "authentication processing part" for performing an authentication process to enable communications with another PLC modem 100.

Next, a communication signal used by the PLC modem 100 to perform an authentication process will be described. The signal used in this example is a robust-form signal.

When transmitting a control signal or the like, the communication part 20 uses a diversity signal utilizing the frequency diversity that is based on the frequency region, the time diversity that is based on the time region, or frequency-time diversity that is based on both of the frequency region and the time region. Further, robust error correcting techniques using concatenated codes, Turbo codes, and LDPC (Low Density Parity Check) codes may be added.

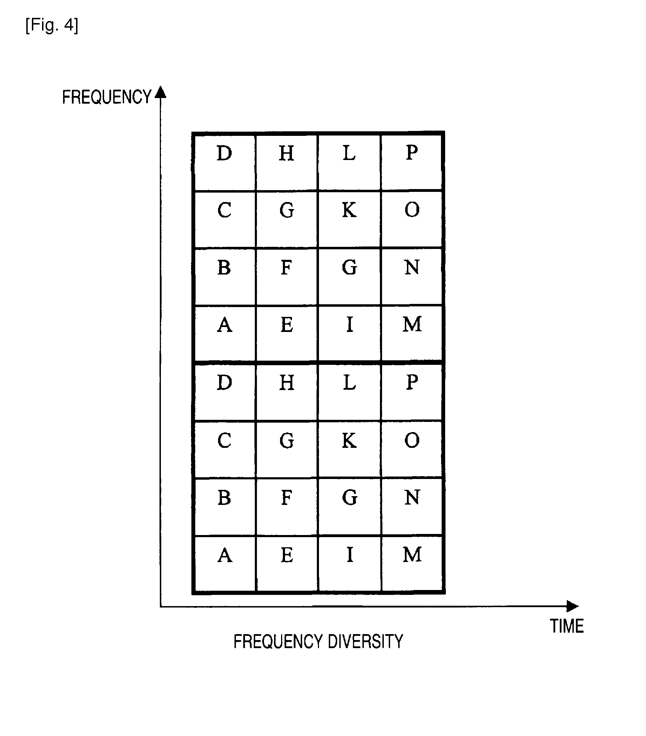

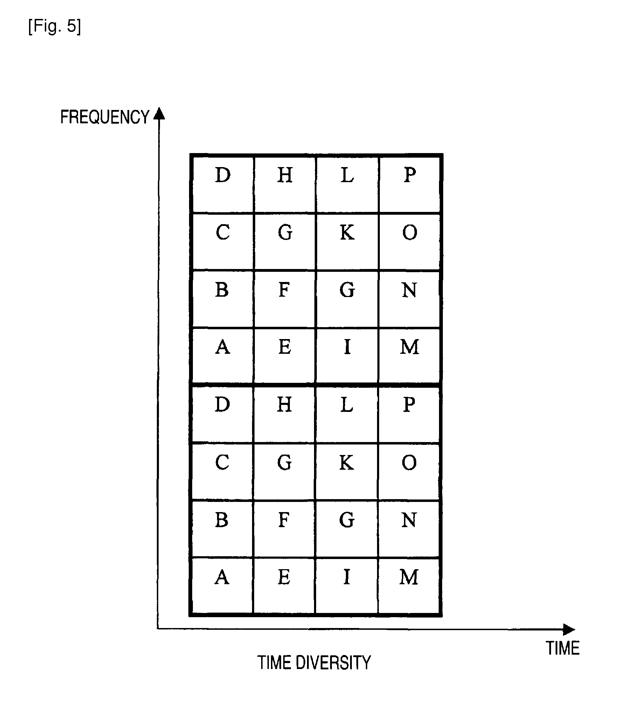

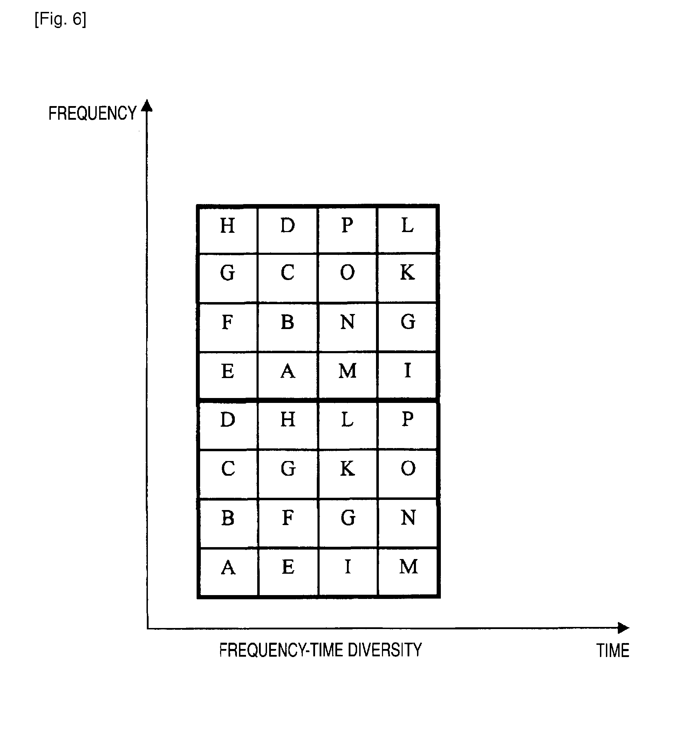

Fig. 4 shows an example of a diversity signal using the frequency diversity. Fig. 5 shows an example of a diversity signal using the time diversity. Fig. 6 shows an example of a diversity signal using the frequency-time diversity. As shown in Figs. 4 through 6, a robust information signal is provided by incorporating repeatability in part of the information in the signal.

This ensures a simple and reliable authentication process even in case it is difficult to move a household electrical appliance incorporating a PLC modem 100 and household electrical appliances as targets of an authentication process are remote from each other.

In this way, the above robust signal ensures that a signal is robust in an authentication process thus allowing a more correct authentication process.

As the distance between PLC modems 100 to communicate with each other becomes long from each other, a transmit signal transmitted by one PLC modem 100 could be substantially attenuated before it is received by the other PLC modem 100. Even in such a case, a correct authentication process is ensured.

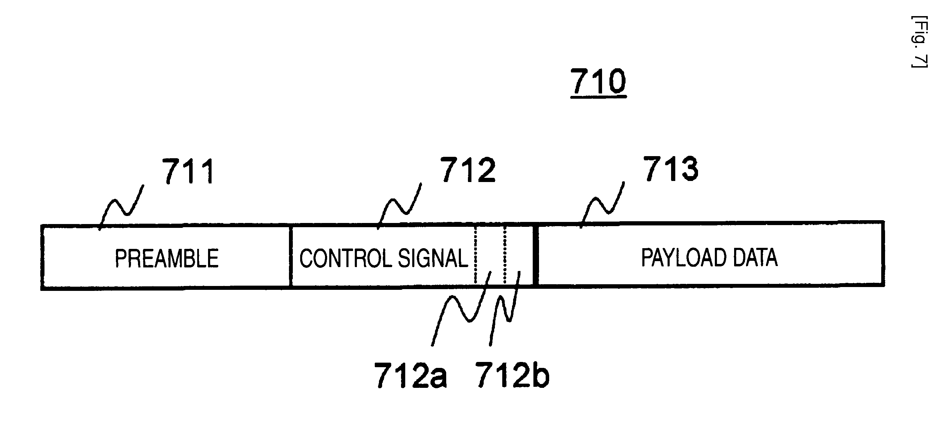

The structure of a data frame used by the PLC modem 100 to perform an authentication process will be described. Fig. 7 shows an example of the data frame structure. A data frame 710 has a preamble 711 including information necessary to transmit the data frame 710, a control signal 712 for performing communication control in an authentication process, and a payload 713 including actual data except the preamble 711 and the control signal 712.

The control signal 712 may include a setup starting signal 712a for notifying that an authentication process is to take place. The control signal 712 may include a setup disable signal 712b for notifying that an authentication process is disabled. While the setup starting signal is a single signal in Fig. 7, two signals, an authentication starting signal and a security starting setup signal may be used.

In Fig. 15 related to the above description, it is possible to encrypt the payload data 713 in the transmission frame in an authentication response and the subsequent authentication process, except for an authentication request. Even in case the payload data 713 is encrypted, it is possible to confirm whether an authentication process is under way since the control signal 712 includes a setup starting signal.

The authentication process method will be described.

This example assumes an authentication process between a PLC modem 100A functioning as a master unit to manage an authentication process and a PLC modem 100B functioning as a slave unit for which an authentication process is managed. Note that the PLC modem 100A functioning as a master unit is not the only element that has to manage an authentication process. For example, in a distributed system, any one of the modems on a network may have the same function as that of the master unit and control an authentication process. While an example of the general authentication process method is shown in Fig. 15, the PLC modem 100A may make an authentication request and the PLC modem 100B may make an authentication response. This example details processes related to an authentication request and an authentication response in the authentication process and a description related to generation of a key and transmission of a network key is omitted.

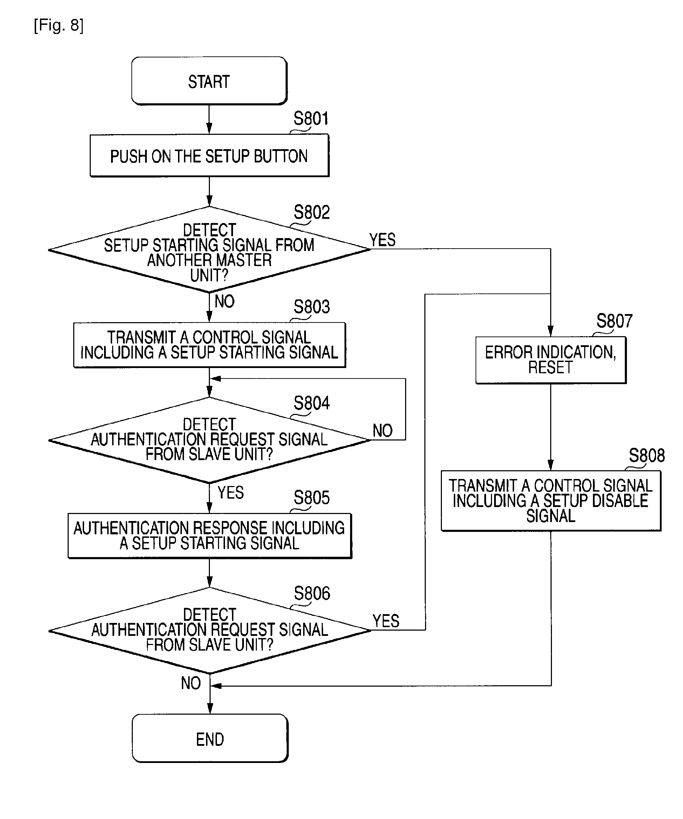

Operation of the PLC modem 100A in an authentication process between master and slave units will be described. Fig. 8 shows an example of the operation flow of the PLC modem 100A in an authentication process.

When the controller 10 detects a push on the setup button 106 of the PLC modem 100A (step S801), the controller 10 monitors a setup starting signal included in a control signal from another PLC modem 100A and determines whether the setup starting signal has been detected within a predetermined period (step S802).

A method for detecting a control signal 902 from another PLC modem 100A is described below. In case the control signal 902 transmitted by another PLC modem 100A uses a beacon, the beacon is received by the communication part 20 and the controller 10 determines whether it is a setup starting signal from the other PLC modem 100A, thus allowing detection of a setup starting signal from the other PLC modem 100A.

In case a setup starting signal from another PLC modem 100A is detected within a predetermined period, an indicator 105 gives an error indication by way of an LED and the controller 10 resets various settings to the initial state (step S807) to complete the process.

After that, the communication part 20 may transmit a control signal including a setup disable signal (step S808). While in case a setup disable signal is considered, a control signal including a setup disable signal is transmitted after an error indication, this order may be reversed.

In case a setup starting signal from another PLC modem 100A is not detected within a predetermined period, it is possible to perform an authentication process without being influenced by other PLC modems 100, so that the communication part 20 transmits a control signal including a setup starting signal (step S803).

After a control signal including a setup starting signal has been transmitted, the controller 10 waits, monitoring an authentication request signal, until an authentication request signal from the PLC modem 100B is detected (step S804). When an authentication request signal is detected, the communication part 20 uses a control signal including a setup starting signal to issue an authentication response (step S805).

A control signal capable of including a setup starting signal or a setup disable signal may be a control signal included as part of an ordinary data frame, or a signal composed of just a control signal such as a beacon, polling or a token.

In this way, in case a setup starting signal from any other PLC modem 100 is not detected, it is possible to perform an authentication process at that point in time. A correct authentication process is enabled by way of a continued authentication process.

After the authentication response, the controller 10 monitors whether an authentication request signal from another PLC modem 100B is generated until a predetermined period has elapsed (step S806). In case another authentication request signal from the other PLC modem 100B is not detected within the predetermined period, while not illustrated, the communication part 20 transmits a key generation request and detects a key generation response from the PLC modem 100B, and the controller 10 generate a key, and the communication part 20 transmits to the PLC modem 100B a network key shared within a power line network to which the PLC modem 100A is connected using the key, and completes the process. In case another authentication request signal from the other PLC modem 100B is detected within the predetermined period, an error indication process and transmission of a control signal including a setup disable signal in steps S807 and S808 follow.

As described above, in case plural authentication requests are detected as a result, it is impossible to determine which is the PLC modem 100B to be subjected to an authentication process, so that the authentication processes from all PLC modems 100B may be canceled. In case authentication request signals from a plurality of PLC modems 100B are detected, a setup disable signal may be transmitted. Thus, the second and the subsequent PLC modems 100B as well as the first PLC modem 100B that has been initially notified of completion of a correct authentication process may readily detect that the initial setup is invalid.

In this way, in case an additional authentication request is received after an authentication process is once performed, it is possible to notify that the completed authentication process is possibly an authentication error by simply transmitting a setup disable signal.

Concerning decision that plural authentication requests have been received from slave units, in Fig. 8 an authentication response is made immediately following an authentication request from the first PLC modem 100B and monitoring is made for an authentication request from a second or subsequent PLC modem 100B until a predetermined period elapses. ,An alternative determination process mentioned below may be used.

Even if an authentication request from a first PLC modem 100B in the step S804 is issued after a control signal including a setup start signal is transmitted by the PLC modem 100A, the PLC modem 100A does not immediately issue an authentication response regarding the first PLC modem 100B but monitors an authentication request signal from another PLC modem 100B until a predetermined period elapses. In this way, it is possible to initially assume an error in authentication for the first PLC modem 100B as well as the subsequent PLC modems 100B of the plurality of PLC modems 100B. This prevents an authentication response to the authentication request received from the first PLC modem 100B thus providing a more correct authentication process.

In an authentication process between a master unit and a slave unit, power control may be made over a control signal.

To be more precise, when transmitting a control signal including a setup starting signal (step S803), the communication part 20 of the PLC modem 100A transmits the control signal with reduced power. In case an authentication request from a PLC modem 100B is not detected for a predetermined period, the communication part 20 raises the power of the control signal. The communication part 20 repeats raising the power of the control signal until it detects an authentication request signal.

By controlling the power of the control signal, it is possible to suppress the possibility of an authentication error with other PLC modems 100 for which authentication setup is not assumed, and to suppress emission from a power line.

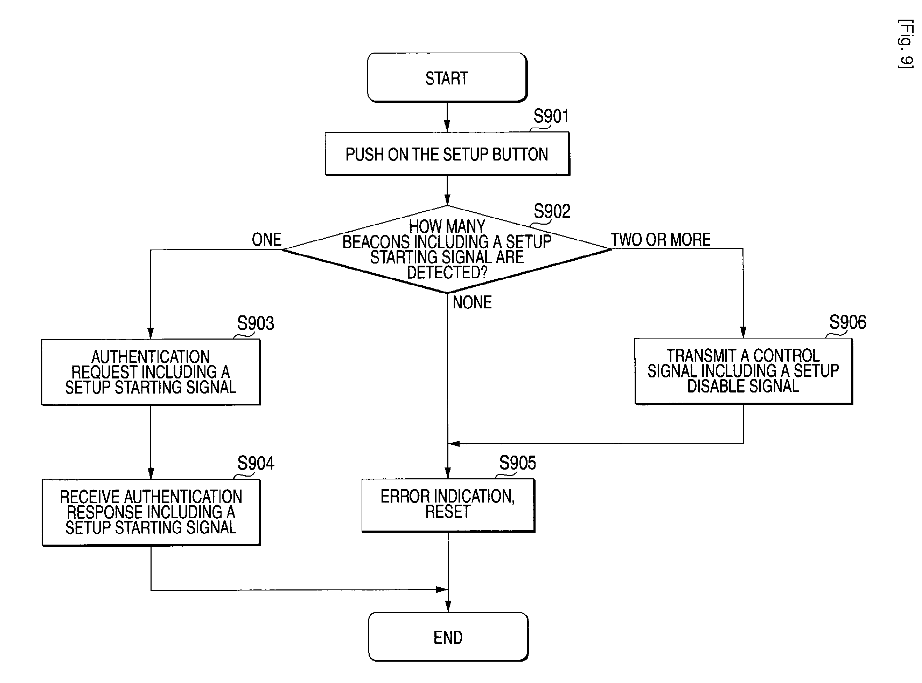

Next, the operation of the PLC modem 100B in an authentication process between a master unit and a slave unit will be described. Fig. 9 shows an example of the operation flow of the PLC modem 100B in an authentication process. While in this example the PLC modem 100A uses a beacon as a control signal, any other signal mentioned earlier may be used.

The controller 10 detects a push on the setup button 106 of the PLC modem 100B (step S901). The PLC modem 100A transmits a beacon at predetermined intervals. The controller 10 monitors beacons to check for beacons from the PLC modem 100A and determines how many beacons including a setup starting signal have been detected within a predetermined period (step S902).

When detecting only one beacon including a setup starting signal, the communication part 20 assumes that no other PLC modems 100A on the same network are engaged in an authentication process and issues an authentication request using a control signal including a setup starting signal (step S903). In response to this authentication request, the communication part 20 detects an authentication response including a setup starting signal from the PLC modem 100A as an authorized counterpart of authentication (step S904) to complete the process.

In case two or more beacons including a setup starting signal are detected within a predetermined period, the indicator 105 gives an error indication by way of an LED assuming that another PLC modem 100A on the same network is engaged in an authentication process, and the controller 10 resets various settings to the initial state (step S905) to complete the process. A beacon including a setup disable signal may be transmitted before an error indication (step S906). While a setup disable signal is transmitted, if any, before an error indication in Fig. 9, this order may be reversed.

In case no beacons are detected within a predetermined period, the indicator 105 gives an error indication by way of an LED, and the controller 10 resets various settings to the initial state (step S905) to complete the process.

In this way, in case only one setup starting signal is received from the PLC modem 100A, it is possible to perform an authentication process at that point in time. A correct authentication process is enabled by way of a continued authentication process.

In case a plurality of setup starting signals from PLC modems 100A are detected, it is possible to notify that a setup process is not to take place at that point in time.

While beacons are monitored for a predetermined period in the above example, in case the content of the beacon is confirmed and it is detected that the beacons are outputted from different modems, the same operation may be made by receiving the beacons without providing a beacon monitoring period.

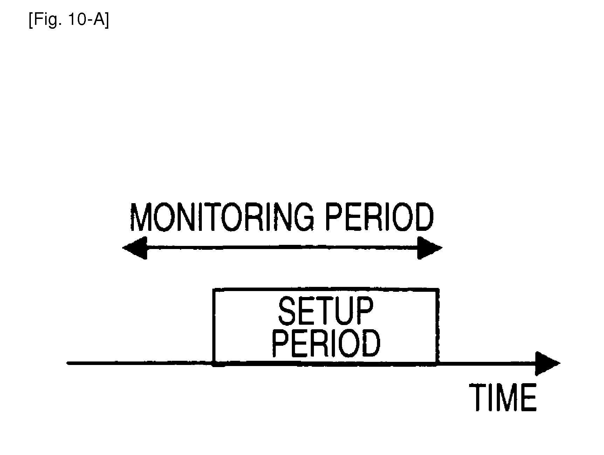

Next, the operation of a PLC modem 100 in an authentication process using a monitoring period mentioned later will be described. Fig. 8 illustrates that, the controller 10 monitors, in an authentication process, any authentication request from other PLC modems 100 for a time period from start of an authentication process by a PLC modem 100 to a predetermined point in time (hereinafter referred to as a "setup period") during which no authentication requests from the other PLC modems must be confirmed in order to avoid an authentication error. In this example, the controller 10 monitors, in an authentication process, any authentication request from other PLC modems 100 for a time period from a predetermined point in time before start of an authentication process by a PLC modem 100 to the end of the setup period (hereinafter referred to as a "monitoring period") to perform the authentication process. The relationship between the setup period and the monitoring period is shown in Fig. 10-A.

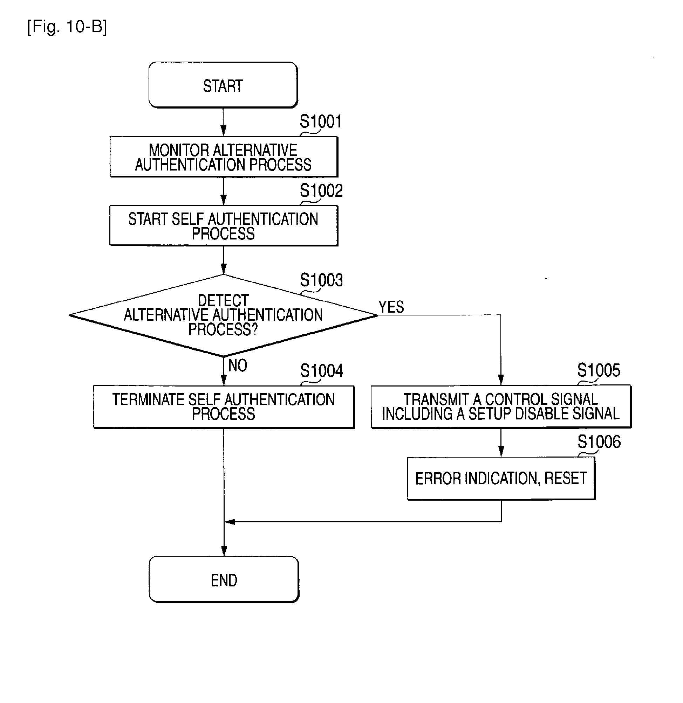

Fig. 10-B shows an example of the operation flow of a PLC modem 100A in an authentication process using a monitoring period. Fig. 10-B shows two authentication processes. One is between two PLC modems (a PLC modem 100C functioning as a master unit and a PLC modem 100D functioning as a slave unit) and the other is between other than the PLC modems (a PLC modem 100A and a PLC modem 100B). In this example, the authentication process between the PLC modem 100A and the PLC modem 100B is referred to as the "self authentication process" and the authentication process between the PLC modem 100C and the PLC modem 100D is referred to as the "alternative authentication process".

The controller 10 performs monitoring of the alternative authentication process within the monitoring period (step S1001) and performs the self authentication process within the setup period (step S1002).

After starting the self authentication process, the controller 10 determines whether an alternative authentication process is under way (step S1003).

A memory 240 sequentially acquires and records various types of process information such as a communication process. In the monitoring period before the setup period starts, the controller 10 may determine whether an alternative authentication process is under way based on the process information.

Whether an alternative authentication process is under way is determined based on whether the controller 10 has detected more than one setup starting signal within the monitoring period. In case more than one setup starting signal has been detected, it may be determined that an alternative authentication process is under way at that point in time.

In case an alternative authentication process is not under way, the controller 10 and the communication part 20 perform the self authentication process until it is complete (step S1004) to terminate the authentication process.

In case an alternative authentication process is under way, the self authentication process is canceled and the indicator 105 gives an error indication using an LED and the controller 10 resets various settings to the initial state (step S1006) to complete the process. An error indication makes it possible to detect that an alternative authentication process is under way at that point in time.

The communication part 20 may transmit a control signal including a setup disable signal before an error indication is given (step S1005). In case a setup disable signal is considered, while a control signal including a setup disable signal is transmitted before an error indication is given in this example, this order may be reversed. Use of a setup disable signal makes it possible to notify other PLC modems 100 that an alternative authentication process is under way, thus ensuring a safer and more reliable authentication process in a network.

Performing an authentication process using a monitoring period provides the following advantages.

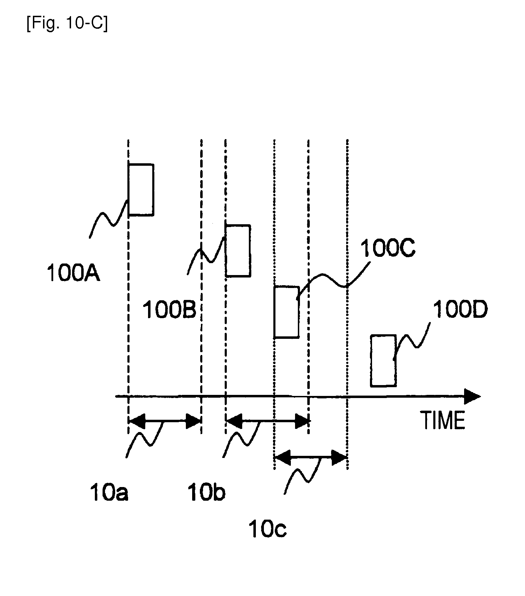

For example, Fig. 10-C shows a situation where there are four PLC modems 100A through 100D. The authentication process between the PLC modem 100A and the PLC modem 100B and the authentication process between the PLC modem 100C and the PLC modem 100D may fail because the authentication process cannot be performed within the setup period 10a of the PLC modem 100A and the setup period 10c of the PLC modem 100C. The authentication process between the PLC modem 100B and the PLC modem 100C may complete successfully because the authentication process can be performed within the setup period 10b of the PLC modem 100B. This situation could happen for example in case the PLC modem 100A and the PLC modem 100B are distant from each other and the setup button 106 of the PLC modem 100B cannot be pressed just after the setup button 106 of the PLC modem 100A is pressed. Even in such a situation, it is possible to monitor a setup starting signal from another PLC modem 100 earlier than the start of the self authentication process, thus assuring a more correct authentication process.

Next, the operation of a PLC modem 100 in an authentication process using the monitoring period in an example other than that in Fig. 10 will be described.

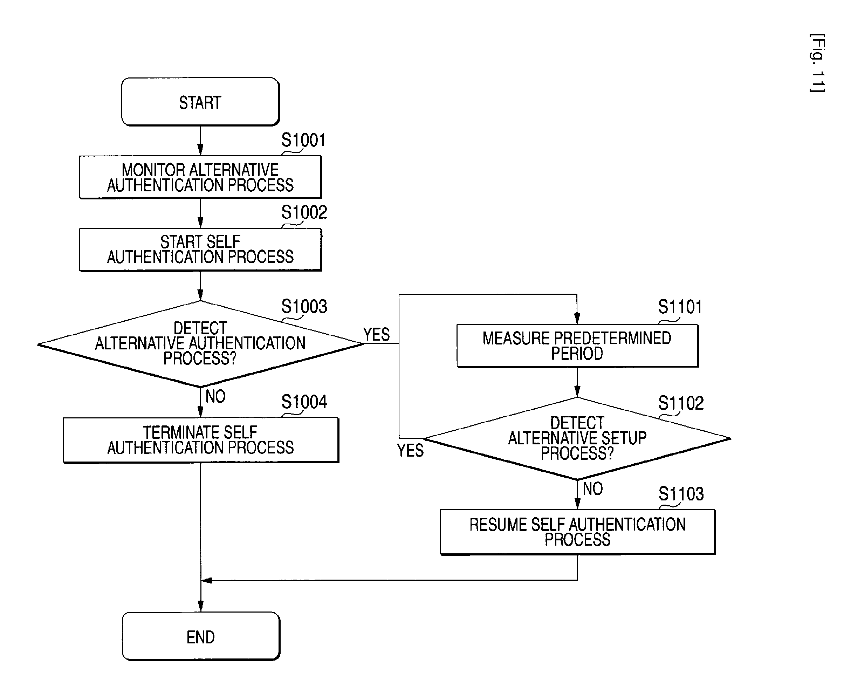

Fig. 11 shows an example of the operation of a PLC modem 100A in an authentication process using a monitoring period. A same numeral is given to the same process as that in Fig. 10-B and the corresponding description is omitted.

The example in Fig. 11 is different from that in Fig. 10-B in the following way. In case it is determined in step S1003 that an alternative authentication process is under way, the self authentication process is suspended and the controller 10 waits until a predetermined period elapses on a timer (not shown) (step S1101) and determines whether the alternative authentication process is still under way at the point in time the predetermined period has elapsed (step S1102). In case the alternative authentication process is still under way at the point in time the predetermined period has elapsed, execution returns to step S1101 where the controller 10 waits until the predetermined period elapses. In case the alternative authentication process is complete at the point in time the predetermined period has elapsed, the controller 10 and the communication part 20 resume the self authentication process (step S1103) to complete the process. The above predetermined period may be a random period or a fixed period in which an alternative authentication process is not detected very often.

In this way, in case an alternative authentication process is under way, it is possible to resume the self authentication process after the alternative authentication process is terminated. Once started, the self authentication process may operate until it is successfully terminated.

Next, the operation of a PLC modem 100 assumed in case a setup period can be flexibly specified instead of using a monitoring period will be described.

Examples of the method for specifying a setup period include the following: a period proportional or inversely proportional to a period in which the setup button 106 is pressed (continuous pressing time) may be specified as a setup period. Arrangement may be made so that, in case an authentication process is performed between a PLC modem 100A and a PLC modem 100B, the controller 10 may change the setup period when the setup button 106 of the PLC modem 100A and the setup button 106 of the PLC modem 100B are pressed successively for example within several seconds.

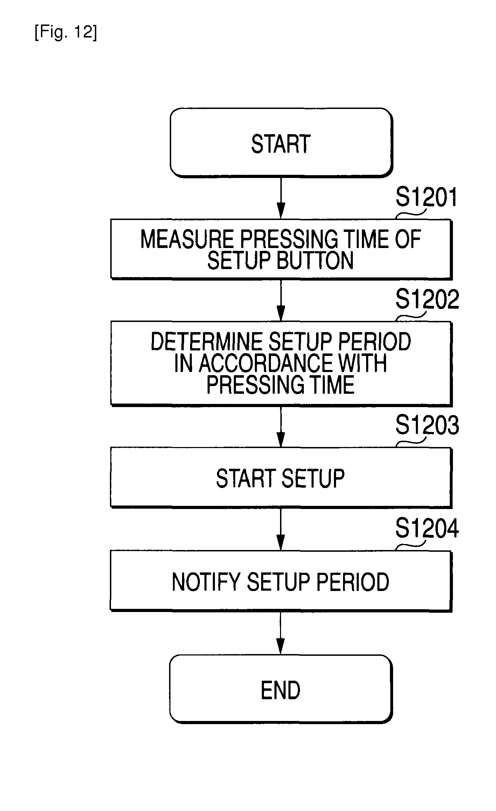

Fig. 12 shows an example of the operation of a PLC modem 100 to change the setup period. Referring to Fig. 12, a method for changing the setup period corresponding to the pressing time of the setup button will be described. First, the controller 10 measures the pressing time of the setup button (step S1201). In accordance with the measurement result of the pressing time, the controller 10 determines a setup period (step S1202). After the setup period is determined, the controller 10 starts the setup procedure (step S1203). When setup is made, the communication part 20 may notify other PLC modems 100 of the setup period used for setup in the control signal (step S1204).

In this way, it is possible to flexibly change the setup period thus ensuring a more correct authentication process.

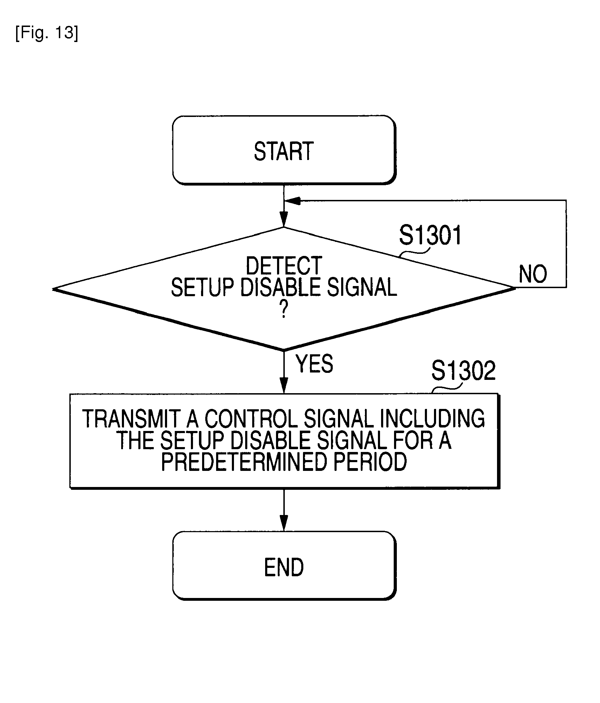

Next, the operation of a PLC modem 100 that has detected a setup disable signal from another PLC modem 100 will be described. Fig. 13 shows an example of the operation of a PLC modem 100 that has detected a setup disable signal from another PLC modem 100.

The controller 10 monitors a setup disable signal transmitted by another PLC modem 100 with each predetermined monitoring period (step S1301). Even in case a setup disable signal is not detected in step S1301, the controller 10 continues monitoring.

In case the controller 10 has detected a setup disable signal, the controller 10 transmits a control signal including a setup disable signal for a predetermined period (step S1302). This allows the PLC modem 100 that has detected a setup disable signal to transmit the same to other PLC modems in order to make it notify that an authentication process is currently disabled in the same network.

The setup disable signal may be included in a signal composed of a control signal such as a beacon, polling or a token, or in an ordinary data frame. The predetermined period may be a period determined by a random variable or a predetermined period such as 5 seconds or 10 seconds.

In this way, a PLC modem 100 that has detected a setup disable signal from another PLC modem 100 may transmit a signal including the setup disable signal thus allowing the other PLC modems 100 to perform a more correct authentication process.

With the foregoing authentication process method, it is possible to reliably perform an authentication process between desired PLC modems even in case a plurality of PLC modems 100 on a network are connected a power line 700.

Next, a method for confirming the registration status indicating whether an authentication process is complete will be described.

This method indicates the number of PLC modems 100 for which an authentication process is complete among the other PLC modems 100 and the authentication confirmation results in order to confirm the registration status.

A device registration list 241 registering information on each PLC modem 100 is stored in a memory 240 for confirmation of a registration status. The device registration list 241 may include information such as the device number and MAC address of each PLC modem 100, a status (registered/unregistered) indicating whether an authentication process has been made with another PLC modem 100, a type (master/slave unit) of each PLC modem 100 and whether each PLC modem 100 is currently connected and is operating. The device registration list 241 is updated by the controller 10 of the PLC modem 100A in case an authentication process is performed between a master unit and a slave unit and transmitted to the PLC modem 100B. This allows the PLC modem 100A and the PLC modem 100B to maintain the latest device registration list 241 in the memory 240 at all times. By referencing the device registration list 241, a PLC modem 100 can transmit a registration confirmation signal to instruct confirmation of a registration status to other PLC modems 100 registered on the device registration list 241 and indicate the number of other PLC modems 100 for which an authentication process is complete with the PLC modem 100.

It is possible to reflect the latest registration information obtained by each PLC modem during ordinary communications as well as the information on the registered devices into the device registration list 241. To be more precise, for example, PLC modems may exchange signals to each other to detect in real time whether a currently registered modem is operating in the normal mode or unregistered mode, thereby obtaining the latest registration information. The registration information is updated with each predetermined period and thus the device registration list 241 includes the latest registration status at all times.

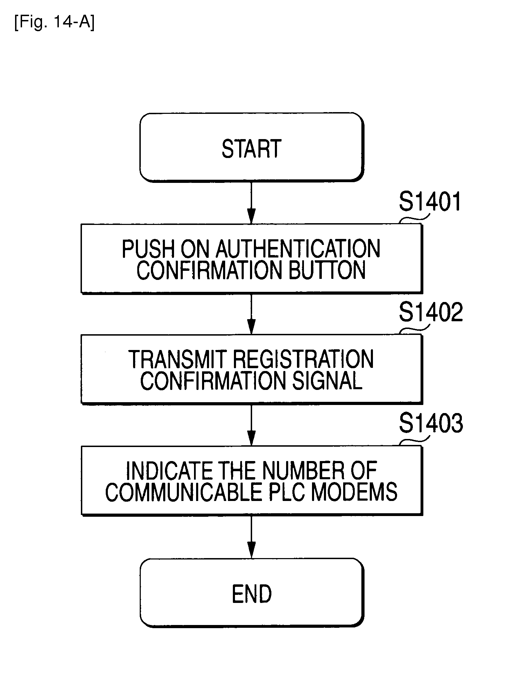

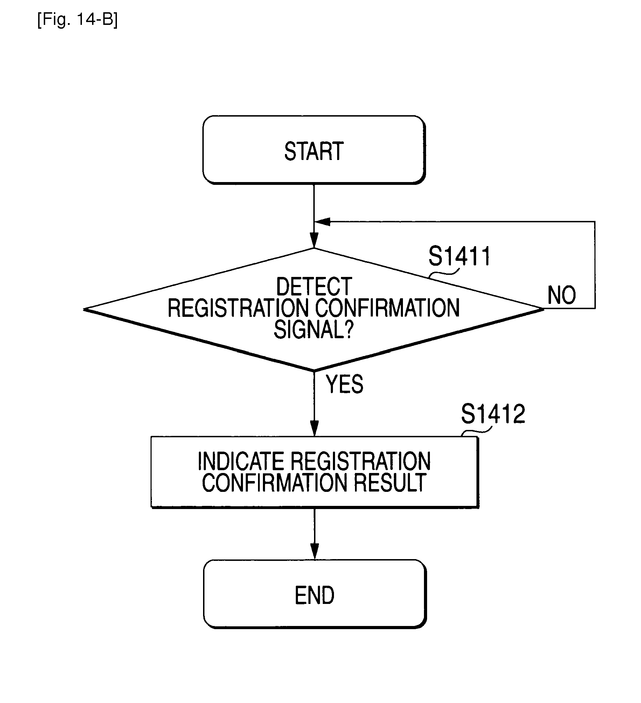

Operation of a PLC modem 100 in confirmation of the registration status will be described referring to Figs. 14A and 14B.

First, the operation of the PLC modem 100 transmitting a registration confirmation signal to instruct confirmation of the registration status will be described referring to Fig. 14-A.

In case registration confirmation between a PLC modem 100 and another PLC modem 100 constituting a power line network is made, when the controller 10 detects a push on the authentication confirmation button 106 of the PLC modem 100 (step S1401), the communication part 20 transmits a registration confirmation signal to other PLC modems 100 registered in the device registration list 241 based on the device registration list 241 (step S1402). When a registration confirmation signal is transmitted, the indicator 105 of the PLC modem 100 indicates the number of communicable PLC modems 100 based on the device registration list 241 (step S1403).

Next, the operation of the PLC modem 100 receiving a registration confirmation signal will be described referring to Fig. 14-B.

When the communication part 20 detects a registration confirmation signal from another PLC modem 100 (step S1411), the indicator 105 indicates the registration confirmation result (step S 1412). To indicate the registration confirmation result, the indicator 105 may cause an LED to blink or illuminate in a different color. Any sound or voice may be used, for example, to notify the registration confirmation result instead of the indication on the indicator 105.

As shown in Figs. 14A and 14B, a PLC modem 100 including only the transmission function, the transmission and modem count indication functions, the transmission and receiving functions, a combination of the modem count indication, transmission and receiving functions, or other combinations may be used.

In this way, by indicating the number of modems and registration confirmation result, it is possible to know, correctly and at the same time, the number and identity of PLC modems 100 for which an authentication process is complete.

In case the number of PLC modems 100 for which an authentication process is complete differs from the number of PLC modems 100 for which the registration confirmation result is indicated, it is possible to detect intercept for example by an external PLC modem. In case the PLC modems 100 for which the registration confirmation result is indicated differs from those expected, it is possible to detect a registration error in an authentication process. In case the number of PLC modems 100 for which an authentication process is complete differs from the number of PLC modems 100 that are expected to have undergone an authentication process, it is possible to detect a PLC modem 100 left unregistered.

With such registration status confirmation, it is possible to confirm that an authentication process has been reliably performed between desired PLC modems in case a plurality of PLC modems 100 exist on a network.

As a simple approach, the communication part 20 of a PLC modem 100 may just indicate the number of communicable PLC modems 100 based on the device registration list 241 without transmitting a registration confirmation signal (step S1402) to other PLC modems 100 registered in the device registration list 241 based on the device registration list 241.

A single button may serve as a setup button and an authentication confirmation button by changing the way of pressing the button. For example, the button may function as a setup button when held down for at least one second and as an authentication confirmation button when pressed for a duration less than one second.

Aspects of the subject-matter described herein are set out in the following clauses.

Further, the power line communication apparatus includes an operation part that is operable, wherein the signal transmitting part transmits the predetermined signal to the other power line communication apparatus in accordance with operation of the operation part.

With this configuration, it is possible to confirm that an authentication process has been reliably performed by desired power line communication apparatuses in accordance with an operation by the operation part even in case a plurality of power line communication apparatuses are connected to a power line.

Further, the power line communication apparatus includes a storage part for storing device registration information indicating a registration status of at least one of a plurality of the other power line communication apparatuses, wherein the signal transmitting part transmits the predetermined signal to the other power line communication apparatuses connected to the power line and causes an indicator to indicate the number of the other power line communication apparatuses that are communicatable while referencing the device registration information stored in the device registration information storage part.

With this configuration, an authentication process is performed with other power line communication apparatuses and it is made possible to readily confirm the number of power line communication apparatuses for which an authentication process is complete, the power line communication apparatuses communicable with the power line communication apparatus.

Further, the power line communication apparatus includes a signal receiving part which receives a predetermined signal, wherein the signal receiving part causes the indicator of the power line communication apparatus to indicate that the power line communication apparatus and the other power line communication apparatus are made communicatable to each other in case the signal receiving part receives the predetermined signal from other power line communication apparatus connected to the power line.

With this configuration, it is possible to confirm that an authentication process has been correctly performed with a power line communication apparatus as a source of a registration status confirmation signal through indication on an LED that an authentication process is complete between power line communication apparatuses.

The power line communication apparatus, wherein the operation part starts the authentication process to enable communications with the other power line communication apparatus; and wherein the authentication processing part transmits a setup starting signal notifying that the authentication process is to take place after the operation of the operation part.

With this configuration, it is possible to reliably perform an authentication process between desired power line communication apparatuses even in case a plurality of power line communication apparatuses are connected to a power line.

The power line communication apparatus, wherein the authentication processing part transmits the setup starting signal in case the authentication processing part receives one or fewer setup starting signal from the other power line communication apparatuses within the predetermined period after the operation of the operation part.

With this configuration, a user performing an authentication process may receive a setup starting signal from a desired power line communication apparatus thus performing a correct authentication process.

The power line communication apparatus, wherein the authentication processing part transmits the setup starting signal with a transmitting power thereof reduced below a transmitting power of the authentication response signal.

With this configuration, it is possible to suppress the possibility of an authentication error with other PLC modems for which authentication setup is not assumed, and to suppress emission from a power line.

The power line communication apparatus, wherein the authentication processing part retransmits the setup starting signal with increased transmitting power in case the authentication processing part fails to receive a response from the other power line communication apparatus within a predetermined period after detecting the operation of the operation part.

With this configuration, it is possible to adjust the magnitude of the power of the setup starting signal thus ensuring an authentication process with minimum power.

The power line communication apparatus, wherein the authentication processing part, transmits a setup disable signal notifying that the authentication process is disabled to the other power line communication apparatuses in case the authentication processing part receives responses from a plurality of the other power line communication apparatuses within a predetermined period after detecting the operation of the operation part.

With this configuration, it is possible to notify other power line communication apparatuses of the possibility of an authentication process with another undesired power line communication apparatus when an authentication process is performed in a power line network to which the power line communication apparatus is currently connected, thus performing a more correct authentication process.

The power line communication apparatus, wherein the authentication processing part changes a length of the predetermined period to monitor reception of the setup starting signal from the other power line communication apparatuses based on a operation time of the operation part.

With this configuration, it is possible to flexibly change the time to monitor a setup starting signal from the other power line communication apparatus, thus performing a more correct setup process.

The power line communication apparatus, wherein a diversity signal is employed as a signal used for the authentication process.

With this configuration, a signal used for an authentication process is made robust thus ensuring a more correct authentication process.

The power line communication apparatus, wherein a frequency diversity signal utilizing a frequency region is used as the diversity signal.

With this configuration, a signal used for an authentication process is made robust thus ensuring a more correct authentication process.

The power line communication apparatus, wherein a time diversity signal utilizing a time region is used as the diversity signal.

With this configuration, a signal used for an authentication process is made robust thus ensuring a more correct authentication process.

The power line communication apparatus, wherein a frequency-time diversity signal utilizing a frequency region and a time region is used as the diversity signal.

With this configuration, a signal used for an authentication process is made robust thus ensuring a more correct authentication process.

The registration status confirmation method includes: transmitting, by the first power line communication apparatus, the registration status confirmation signal and indicating information including a number of the second power line communication apparatuses that are communicatable to the first power line communication apparatus while referencing device registration information indicating the registration status between the power line communication apparatuses.

With this method, it is possible to readily confirm the number of power line communication apparatuses for which an authentication process is complete with the power line communication apparatus, the power line communication apparatuses communicable with the power line communication apparatus.

The registration status confirmation method includes: transmitting, by the first power line communication apparatus, a setup starting signal notifying that an authentication process is to take place, after starting the authentication process to enable communications with the second power line communication apparatus.

With this method, it is possible to reliably perform an authentication process between desired power line communication apparatuses even in case a plurality of power line communication apparatuses are connected to a power line.

The registration status confirmation method, wherein a diversity signal is employed as a signal used for the authentication process.

With this configuration, a signal used for an authentication process is made robust thus ensuring a more correct authentication process.

The registration status confirmation method includes: indicating, by the first power line communication apparatus connected to the power line, information including a number of the second power line communication apparatuses that are communicatable based on device registration information indicating the registration status of the second power line communication apparatuses.

With this method, it is possible to grasp the number of registered PLC modems without transmitting a registration confirmation signal to other PLC modems.

### Industrial Applicability

With the invention, it is utilized as a power line communication apparatus and a power line communication system to be able to confirm that an authentication process has been reliably performed by desired power line communication apparatuses in case a plurality of power line communication apparatuses are connected to a power line. It is also utilized as a power line communication modem and a power line communication system to be able to reliably perform an authentication process between desired power line communication apparatuses in case a plurality of power line communication apparatuses are connected to a power line.

## Claims

1. A power line communication apparatus (100, 100A) for performing communications through a power line (700) with an other power line communication apparatus (100, 100B), the power line communication apparatus (100, 100A) comprising:
a communication part (20) for transmitting/receiving a signal with the other power line communication apparatus (100, 100B); and
a controller (10) for performing an authentication process, the authentication process including receiving through the communication part (20) an authentication request signal for a request to start an authentication process to share a cryptographic key of encrypted communication performed between the power line communication apparatus (100, 100A) and the other power line communication apparatus (100, 100B), transmitting through the communication part (20) an authentication response signal which indicates a reception of the authentication request signal to the other power line communication apparatus (100, 100B), generating the cryptographic key, and transmitting the cryptographic key to the other power line communication apparatus (100, 100B) through the communication part (20);
wherein the controller (10) is further adapted for transmitting thereafter through the communication part (20) to the other power line communication apparatus (100, 100B) a registration confirmation signal for causing the other power line communication apparatus (100, 100B) to provide an indication confirming a registration status, the registration status indicating whether the authentication process is completed, wherein in case of a completed authentication process the other power line communication apparatus (100, 100B) can perform the encrypted communication using the cryptographic key.

2. The power line communication apparatus (100, 100A) according to claim 1,
wherein the other power line communication apparatus (100, 100B) is provided in a plurality,
wherein the power line communication apparatus (100, 100A) further comprises a memory (240) for storing information unique to each of the plurality of the other power line communication apparatuses (100, 100B), and
wherein the controller (10) is adapted to transmit the cryptographic key to one of the plurality of the other power line communication apparatuses (100, 100B) through the communication part (20), storing into the memory (240) information unique to the one of the other power line communication apparatuses (100, 100B) to which the cryptographic key has been transmitted, and to transmit through the communication part (20) the registration confirmation signals to the plurality of the other power line communication apparatuses (100, 100B) based on the information unique to each of the plurality of the other power line communication apparatuses (100, 100B) which are stored in the memory (240).

3. The power line communication apparatus (100, 100A) according to claim 2,
further comprising an indicator (105),
wherein the controller (10) allows the indicator (105) to indicate information of the number of power line communication apparatuses (100, 100B) which share the cryptographic key, based on the information unique to each of the plurality of the other power line communication apparatuses (100, 100B) which are stored in the memory (240).

4. The power line communication apparatus (100, 100A) according to anyone of claims 1 to 3,
further comprising an operation part (106),
wherein the controller (10) is adapted to transmit the registration confirmation signal through the communication part (20) when the operation part (106) is operated after the cryptographic key has been transmitted to the other power line communication apparatus (100, 100B).

5. A power line communication apparatus (100, 100B) for performing communications through a power line (700) with an other power line communication apparatus (100, 100A), the power line communication apparatus (100, 100B) comprising:
a communication part (20) for transmitting/receiving a signal with the other power line communication apparatus (100, 100A);
an indicator (105); and
a controller (10) for performing an authentication process, the authentication process including transmitting through the communication part (20) an authentication request signal for a request to start an authentication process to share a cryptographic key of encrypted communication performed between the power line communication apparatus (100, 100B) and the other power line communication apparatus (100, 100A), receiving through the communication part (20) an authentication response signal which indicates a reception of the authentication request signal from the other power line communication apparatus (100, 100A), receiving the cryptographic key from the other power line communication apparatus (100, 100A) through the communication part (20), wherein the controller (10) is further adapted for thereafter receiving through the communication part (20) from the other power line communication apparatus (100, 100B) a registration confirmation signal as a request for an indication confirming a registration status, the registration status indicating whether the authentication process is completed, wherein in case of a completed authentication process the power line communication apparatus (100, 100B) can perform the encrypted communication using the cryptographic key, and the controller is adapted for allowing the indicator (105) to indicate that the encrypted communication can be performed using the cryptographic key with the other power line communication apparatus (100, 100A) in correspondence with the registration confirmation signal.

6. A power line communication system including a first power line communication apparatus (100, 100A) according to any one of claims 1 to 4 and a second power line communication apparatus (100, 100B) according to claim 5 which communicate through a power line (700) with each other.

7. A registration status confirmation method for confirming a registration status of a power line communication apparatus (100, 100A) with an other power line communication apparatus (100, 100B) which is communicated through a power line (700), the registration status confirmation method comprising:
an authentication process, the authentication process including:
an authentication request signal reception step (S804) of receiving an authentication request signal for a request to start an authentication process to share a cryptographic key of encrypted communication performed with the other power line communication apparatus (100, 100B);
an authentication response signal transmission step (S805) of transmitting an authentication response signal which indicates a reception of the authentication request signal to the other power line communication apparatus (100, 100B);
a cryptographic key generation step of generating the cryptographic key, and
a cryptographic key transmission step of transmitting the cryptographic key to the other power line communication apparatus (100, 100B);
wherein the registration status confirmation method comprises after the authentication process:
a registration confirmation signal transmission step (S1402) of transmitting, to the other power line communication apparatus (100, 100B), a registration confirmation signal for causing the other power line communication apparatus (100, 100B) to provide an indication confirming a registration status, the registration status indicating whether the authentication process is completed, wherein in case of a completed authentication process the other power line communication apparatus (100, 100B) can perform the encrypted communication using the cryptographic key.

8. A registration status confirmation method for confirming a registration status of a power line communication apparatus (100, 100B) with an other power line communication apparatus (100, 100A) which is communicated through a power line (700), the registration status confirmation method comprising:
an authentication process, the authentication process including:
an authentication request signal transmission step (S903) of transmitting an authentication request signal for a request to start an authentication process to share a cryptographic key of encrypted communication performed with the other power line communication apparatus (100, 100A);
an authentication response signal reception step (S904) of receiving an authentication response signal which indicates a reception of the authentication request signal from the other power line communication apparatus (100, 100A); and
a cryptographic key reception step of receiving the cryptographic key;
wherein the registration status confirmation method comprises after the authentication process:
a registration confirmation signal reception step (S1411) of receiving, from the other power line communication apparatus (100, 100A), a registration confirmation signal as a request for an indication confirming a registration status, the registration status indicating whether the authentication process is completed, wherein in case of a completed authentication process the encrypted communication can be performed using the cryptographic key; and
an indication step (S1403) of indicating that the encrypted communication can be performed using the cryptographic key with the other power line communication apparatus (100, 100A) in correspondence with the registration confirmation signal.

9. A registration status confirmation method for confirming a registration status between a first power line communication apparatus (100, 100A) and a second power line communication apparatus (100, 100B) which communicate through a power line (700) with each other, the registration status confirmation method comprising the steps of the registration status confirmation method of claim 7 performed by the first power line communication apparatus (100, 100A) and the steps of the registration status confirmation method of claim 8 performed by the second power line communication apparatus (100, 100B).

10. The registration status confirmation method according to claim 9,
wherein the second power line communication apparatus is provided in a plurality,
wherein the authentication request signal reception step (S804) includes receiving the authentication request signal from one of the plurality of second power line communication apparatuses (100, 100B),
wherein the cryptographic key generation step includes storing information unique to the second power line communication apparatus (100, 100B) which has transmitted the authentication request signal, and
wherein the registration confirmation signal transmission step (S1402) includes transmitting the registration confirmation signals to the plurality of second power line communication apparatuses (100, 100B) based on the information unique to each of the plurality of second power line communication apparatuses (100, 100B) which are stored in the first power line communication apparatus (100, 100A).

11. The registration status confirmation method according to claim 10,
wherein the first power line communication apparatus (100, 100A) indicates information indicative of the number of the power line communication apparatuses (100, 100B) which share the cryptographic key, based on the information unique to each of the plurality of second power line communication apparatuses (100, 100B) which are stored in the first power line communication apparatus (100, 100A).

12. The registration status confirmation method according to anyone of claims 9 to 11,
wherein the registration confirmation signal transmission step (S1402) includes transmitting the registration confirmation signal when the first power line communication apparatus (100, 100A) is operated after the cryptographic key has been transmitted.

## Patentansprüche

1. Stromleitungskommunikationsvorrichtung (100, 100A) zum Durchführen von Kommunikation über eine Stromleitung (700) mit einer anderen Stromleitungskommunikationsvorrichtung (100, 100B), wobei die Stromleitungskommunikationsvorrichtung (100, 100A) umfasst:
einen Kommunikationsteil (20) zum Übermitteln/Empfangen eines Signals an die / von der anderen Stromleitungskommunikationsvorrichtung (100, 100B) und
eine Steuereinheit (10) zum Durchführen eines Authentifizierungsprozesses, wobei der Authentifizierungsprozess ein Empfangen eines Authentifizierungsanfragesignals über das Kommunikationsteil (20) für eine Anfrage zum Starten eines Authentifizierungsprozesses zum Teilen eines kryptographischen Schlüssels einer verschlüsselten Kommunikation, die zwischen der Stromleitungskommunikationsvorrichtung (100, 100A) und der anderen Stromleitungskommunikationsvorrichtung (100, 100B) durchgeführt wird, ein Übermitteln eines Authentifizierungsantwortsignals über das Kommunikationsteil (20), das einen Empfang des Authentifizierungsanfragesignals angibt, an die andere Stromleitungskommunikationsvorrichtung (100, 100B), ein Erzeugen des kryptographischen Schlüssels und ein Übermitteln des kryptographischen Schlüssels an die andere Stromleitungskommunikationsvorrichtung (100, 100B) über das Kommunikationsteil (20) umfasst,
wobei die Steuereinheit (10) ferner dazu ausgestaltet ist, danach über das Kommunikationsteil (20) an die andere Stromleitungskommunikationsvorrichtung (100, 100B) ein Registrierungsbestätigungssignal zu übermitteln, um die andere Stromleitungskommunikationsvorrichtung (100, 100B) zu veranlassen, eine Anzeige vorzusehen, die einen Registrierungsstatus bestätigt, wobei der Registrierungsstatus angibt, ob der Authentifizierungsprozess abgeschlossen ist, wobei in einem Fall eines abgeschlossenen Authentifizierungsprozesses die andere Stromleitungskommunikationsvorrichtung (100, 100B) die verschlüsselte Kommunikation unter Verwendung des kryptographischen Schlüssels durchführen kann.

2. Stromleitungskommunikationsvorrichtung (100, 100A) nach Anspruch 1,
wobei mehrere andere Stromleitungskommunikationsvorrichtungen (100, 100B) vorgesehen sind,
wobei die Stromleitungskommunikationsvorrichtung (100, 100A) ferner einen Speicher zum Speichern von Information aufweist, die einzigartig für jede der mehreren anderen Stromleitungskommunikationsvorrichtungen (100, 100B) ist, und
wobei die Steuereinheit (10) ausgestaltet ist, den kryptographischen Schlüssel an eine der mehreren anderen Stromleitungskommunikationsvorrichtungen (100, 100B) über das Kommunikationsteil (20) zu übermitteln, Information, die einzigartig für die anderen Stromleitungskommunikationsvorrichtungen (100, 100B) ist, an die der kryptographische Schlüssel übermittelt wurde, in den Speicher (240) zu speichern, und über das Kommunikationsteil (20) die Registrierungsbestätigungssignale an die mehreren anderen Stromleitungskommunikationsvorrichtungen (100, 100B) auf Basis der Information zu senden, die einzigartig für jede der mehreren anderen Stromleitungskommunikationsvorrichtungen (100, 100B) ist, die in dem Speicher (240) gespeichert ist.

3. Stromleitungskommunikationsvorrichtung (100, 100A) nach Anspruch 2,
ferner mit einem Indikator (105),
wobei die Steuereinheit (10) dem Indikator (105) erlaubt, Information hinsichtlich der Zahl von Stromleitungskommunikationsvorrichtungen (100, 100B) anzuzeigen, die sich den kryptographischen Schlüssel teilen, auf Basis der Information, die einzigartig für jede der mehreren anderen Stromleitungskommunikationsvorrichtungen (100, 100B) ist, die in dem Speicher (240) gespeichert ist.

4. Stromleitungskommunikationsvorrichtung (100, 100A) nach einem der Ansprüche 1 bis 3,
ferner mit einem Bedienungsteil (106),
wobei die Steuereinheit (10) ausgestaltet ist, das Registrierungsbestätigungssignal durch das Kommunikationsteil (20) zu übermitteln, wenn das Bedienungsteil (106) bedient wird, nachdem der kryptographische Schlüssel an die andere Stromleitungskommunikationsvorrichtung (100, 100B) übermittelt wurde.

5. Stromleitungskommunikationsvorrichtung (100, 100B) zum Durchführen von Kommunikation über eine Stromleitung (700) mit einer anderen Stromleitungskommunikationsvorrichtung (100, 100A), wobei die Stromleitungskommunikationsvorrichtung (100, 100B) umfasst:
einem Kommunikationsteil (20) zum Übermitteln/Empfangen eines Signals an/von der anderen Stromleitungskommunikationsvorrichtung (100, 100A),
einen Indikator (105) und
eine Steuereinheit (10) zum Durchführen eines Authentifizierungsprozesses, wobei der Authentifizierungsprozess ein Übermitteln eines Authentifizierungsanfragesignals über das Kommunikationsteil (20) für eine Anfrage zum Starten eines Authentifizierungsprozesses zum Teilen eines kryptographischen Schlüssels einer verschlüsselten Kommunikation, die zwischen der Stromleitungskommunikationsvorrichtung (100, 100B) und der anderen Stromleitungskommunikationsvorrichtung (100, 100A) durchgeführt wird, Empfangen eines Authentifizierungsantwortsignals über das Kommunikationsteil (20), das einen Empfang des Authentifizierungsanfragesignals angibt, von der anderen Stromleitungskommunikationsvorrichtung (100, 100A), ein Empfangen des kryptographischen Schlüssels von der anderen Stromleitungskommunikationsvorrichtung (100, 100A) über das Kommunikationsteil (20) umfasst, wobei die Steuereinheit (10) ferner dazu ausgestaltet ist, danach über das Kommunikationsteil (20) von der anderen Stromleitungskommunikationsvorrichtung (100, 100B) ein Registrierungsbestätigungssignal als eine Anfrage für eine Anzeige zu empfangen, die einen Registrierungsstatus bestätigt, wobei der Registrierungsstatus angibt, ob der Authentifizierungsprozess abgeschlossen ist, wobei in einem Fall eines abgeschlossenen Authentifizierungsprozesses die Stromleitungskommunikationsvorrichtung (100, 100B) die verschlüsselte Kommunikation unter Verwendung des kryptographischen Schlüssels durchführen kann, und die Steuereinheit ausgestaltet ist, dem Indikator (105) zu erlauben, entsprechend dem Registrierungsbestätigungssignal anzuzeigen, dass die verschlüsselte Kommunikation unter Verwendung des kryptographischen Schlüssels mit der anderen Stromleitungskommunikationsvorrichtung (100, 100A) durchgeführt werden kann.

6. Stromleitungskommunikationssystem mit einer ersten Stromleitungskommunikationsvorrichtung (100, 100A) nach einem der Ansprüche 1 bis 4 und einer zweiten Stromleitungskommunikationsvorrichtung (100, 100B) nach Anspruch 5, die durch eine Stromleitung (700) miteinander kommunizieren.

7. Registrierungsstatusbestätigungsverfahren zum Bestätigen eines Registrierungsstatus einer Stromleitungskommunikationsvorrichtung (100, 100A) mit einer anderen Stromleitungskommunikationsvorrichtung (100, 100B), die durch eine Stromleitung (700) kommuniziert wird, wobei das Registrierungsstatusbestätigungsverfahren umfasst:
einen Authentifizierungsprozess, wobei der Authentifizierungsprozess umfasst:
einen Authentifizierungsanfragesignalempfangsschritt (S804) des Empfangens eines Authentifizierungsanfragesignals für eine Anfrage zum Starten eines Authentifizierungsprozesses zum Teilen eines kryptographischen Schlüssels einer verschlüsselten Kommunikation, die mit der anderen Stromleitungskommunikationsvorrichtung (100, 100B) durchgeführt wird,
einen Authentifizierungsantwortsignalübermittlungsschritt (S805) des Übermittelns eines Authentifizierungsantwortsignals an die andere Stromleitungskommunikationsvorrichtung (100, 100B), das einen Empfang des Authentifizierungsanfragesignals angibt,
einen Erzeugungsschritt des kryptographischen Schlüssels des Erzeugens des kryptographischen Schlüssels und einen Übermittlungsschritt des kryptographischen Schlüssels des Übermittelns des kryptographischen Schlüssels an die andere Stromleitungskommunikationsvorrichtung (100, 100B),
wobei das Registrierungsstatusbestätigungsverfahren nach dem Authentifizierungsprozess umfasst:
einen Registrierungsbestätigungssignalübermittlungsschritt (S1402) des Übermittelns eines Registrierungsbestätigungssignals an die andere Stromleitungskommunikationsvorrichtung (100, 100B) zum Veranlassen der anderen Stromleitungskommunikationsvorrichtung (100, 100B), eine Anzeige vorzusehen, die einen Registrierungsstatus bestätigt, wobei der Registrierungsstatus angibt, ob der Authentifizierungsprozess abgeschlossen ist, wobei in einem Fall eines abgeschlossenen Authentifizierungsprozesses die andere Stromleitungskommunikationsvorrichtung (100, 100B) die verschlüsselte Kommunikation unter Verwendung des kryptographischen Schlüssels durchführen kann.

8. Registrierungsstatusbestätigungsverfahren zum Bestätigen eines Registrierungsstatus einer Stromleitungskommunikationsvorrichtung (100, 100B) mit einer anderen Stromleitungskommunikationsvorrichtung (100, 100A), der über eine Stromleitung (700) kommuniziert wird, wobei das Registrierungsstatusbestätigungsverfahren umfasst:
einen Authentifizierungsprozess, wobei der Authentifizierungsprozess umfasst:
einen Authentifizierungsanfragesignalübermittlungsschritt (S903) des Übermittelns eines Authentifizierungsanfragesignals für eine Anfrage zum Starten eines Authentifizierungsprozesses zum Teilen eines kryptographischen Schlüssels einer verschlüsselten Kommunikation, die mit der anderen Stromleitungskommunikationsvorrichtung (100, 100A) durchgeführt wird,
einen Authentifizierungsantwortsignalempfangsschritt (S904) des Empfangens eines Authentifizierungsantwortsignals, das einen Empfang des Authentifizierungsanfragesignals angibt, von der anderen Stromleitungskommunikationsvorrichtung (100, 100A) und
einen Empfangsschritt des kryptographischen Schlüssels des Empfangens des kryptographischen Schlüssels,
wobei das Registrierungsstatusbestätigungsverfahren nach dem Authentifizierungsprozess umfasst:
einen Registrierungsbestätigungssignalsempfangsschritt (S1411) des Empfangens eines Registrierungsbestätigungssignals von der anderen Stromleitungskommunikationsvorrichtung (100, 100A) als eine Anfrage für eine Anzeige, die einen Registrierungsstatus bestätigt, wobei der Registrierungsstatus angibt, ob der Authentifizierungsprozess abgeschlossen ist, wobei in einem Fall eines abgeschlossenen Authentifizierungsprozesses die verschlüsselte Kommunikation unter Verwendung des kryptographischen Schlüssels durchgeführt werden kann, und
einen Anzeigeschritt (S1403) des Anzeigens entsprechend dem Registrierungsbetätigungssignal, dass die verschlüsselte Kommunikation unter Verwendung des kryptographischen Schlüssels mit der anderen Stromleitungskommunikationsvorrichtung (100, 100A) durchgeführt werden kann.

9. Registrierungsstatusbestätigungsverfahren zum Bestätigen eines Registrierungsstatus zwischen einer ersten Stromleitungskommunikationsvorrichtung (100, 100A) und einer zweiten Stromleitungskommunikationsvorrichtung (100, 100B), die über eine Stromleitung (700) miteinander kommunizieren, wobei das Registrierungsstatusbestätigungsverfahren die Schritte des Registrierungsstatusbestätigungsverfahrens von Anspruch 7 aufweist, die von der ersten Stromleitungskommunikationsvorrichtung (100, 100A) durchgeführt werden, und die Schritte des Registrierungsstatusbestätigungsverfahrens nach Anspruch 8, die von der zweiten Stromleitungskommunikationsvorrichtung (100, 100B) durchgeführt werden.

10. Registrierungsstatusbestätigungsverfahren nach Anspruch 9,
wobei mehrere zweite Stromleitungskommunikationsvorrichtungen vorgesehen sind,
wobei der Authentifizierungsanfragesignalempfangsschritt (S804) ein Empfangen des Authentifizierungsanfragesignals von einer der mehreren zweiten Stromleitungskommunikationsvorrichtungen (100, 100B) aufweist,
wobei der Erzeugungsschritt des kryptographischen Schlüssels ein Speichern von Information aufweist, die einzigartig für die zweite Stromleitungskommunikationsvorrichtung (100, 100B) ist, die das Authentifizierungsanfragesignal übermittelt hat, und
wobei der Registrierungsbestätigungssignalübermittlungsschritt (S1402) ein Übermitteln der Registrierungsbestätigungssignale an die mehreren zweiten Stromleitungskommunikationsvorrichtungen (100, 100B) auf Basis der Information umfasst, die einzigartig für die mehreren zweiten Stromleitungskommunikationsvorrichtungen (100, 100B) ist und die in der ersten Stromleitungskommunikationsvorrichtung (100, 100A) gespeichert ist.

11. Registrierungsstatusbestätigungsverfahren nach Anspruch 10,
wobei die erste Stromleitungskommunikationsvorrichtung (100, 100A) Information anzeigt, die die Zahl der Stromleitungskommunikationsvorrichtungen (100, 100B) angibt, die den kryptographischen Schlüssel teilen, auf Basis der Information, die einzigartig für die mehreren zweiten Stromleitungskommunikationsvorrichtungen (100, 100B) ist und die in der ersten Stromleitungskommunikationsvorrichtung (100, 100A) gespeichert ist.

12. Registrierungsstatusbestätigungsverfahren nach einem der Ansprüche 9 bis 11,
wobei der Registrierungsbestätigungssignalübermittlungsschritt (S1402) ein Übermitteln des Registrierungsbestätigungssignals umfasst, wenn die erste Stromleitungskommunikationsvorrichtung (100, 100A) bedient wird, nachdem der kryptographische Schlüssel übermittelt wurde.

## Revendications

1. Dispositif de communication par ligne électrique (100, 100A) pour la mise en oeuvre de la communication par une ligne électrique (700) avec un autre dispositif de communication par ligne électrique (100, 100B), le dispositif de communication par ligne électrique (100, 100A) comprenant:
une partie de communication (20) pour la transmission/ réception d'un signal au/ de l'autre dispositif de communication par ligne (100, 100B) et
une unité de commande (10) pour la mise en oeuvre du procès d'authentification, en précisant que le procès d'authentification comprend une réception d'un signal de requête d'authentification par la partie de communication (20) pour une requête pour démarrer le procès d'authentification pour le partage d'une clé cryptographique d'une communication cryptée qui est mise en oeuvre entre le dispositif de communication par ligne électrique (100, 100A) et l'autre dispositif de communication par ligne électrique (100, 100B), une transmission d'un signal de réponse d'authentification par la partie de communication (20), qui indique une réception du signal de requête d'authentification, à l'autre dispositif de communication par ligne électrique (100, 100 B), une génération de la clé cryptographique et une transmission de la clé cryptographique à l'autre dispositif de communication par ligne électrique (100, 100 B) par la partie de communication (20),
en précisant que l'unité de contrôle (10) est en outre conçue pour transmettre ensuite par la partie de communication (20) à l'autre dispositif de communication par ligne électrique (100, 100B) un signal de confirmation de l'enregistrement, pour activer l'autre dispositif de communication par ligne électrique (100, 100B), à prévoir un affichage qui confirme un statut d'enregistrement, en précisant que le statut d'enregistrement indique, si le procès d'authentification est achevé, en précisant que dans les cas d'un procès d'authentification achevé l'autre dispositif de communication par ligne électrique (100, 100B) peut mettre en oeuvre la communication cryptée en utilisant la clé cryptographique.

2. Dispositif de communication par ligne électrique (100, 100A) selon la revendication 1,
en précisant que plusieurs autres dispositifs de communication par ligne électrique (100, 100B) sont prévus,
en précisant que le dispositif de communication par ligne électrique (100, 100A) présente en outre une mémoire pour le stockage d'information qui est unique pour chacun des plusieurs autres dispositifs de communication par ligne électrique (100, 100 B), et
en précisant que l'unité de contrôle (10) est conçue pour transmettre la clé cryptographique à l'une des plusieurs autres dispositifs de communication par ligne électrique (100, 100B) par la partie de communication (20), à stocker de l'information qui est unique pour les autres dispositifs de communication par ligne électrique (100, 100B), auxquels la clé cryptographique a été transmise, dans la mémoire (240), et pour envoyer par la partie de communication (20) les signaux de confirmation de l'enregistrement aux plusieurs autres dispositifs de communication par ligne électrique (100, 100B) sur la base de l'information qui est unique pour chacun des plusieurs autres dispositifs de communication par ligne électrique (100, 100B) est, qui est stockée dans la mémoire (240).

3. Dispositif de communication par ligne électrique (100, 100A) selon la revendication 2,
en outre, avec un indicateur (105),
en précisant que l'unité de contrôle (10) permet à l'indicateur (105) d'indiquer de l'information en ce qui concerne le nombre des dispositifs de communication par ligne électrique (100, 100B) qui partagent la clé cryptographique, sur la base de l'information qui est unique pour chacun des plusieurs autres dispositifs de communication par ligne électrique (100, 100B) est, qui est stockée dans la mémoire (240).

4. Dispositif de communication par ligne électrique (100, 100A) selon l'une quelconque des revendications 1 à 3,
en outre, avec un panneau de commande (106),
en précisant que l'unité de contrôle (10) est conçue pour transmettre le signal de confirmation de l'enregistrement par la partie de communication (20), si le panneau de commande (106) est manié après que la clé cryptographique a été transmise à l'autre dispositif de communication par ligne électrique (100, 100B).

5. Dispositif de communication par ligne électrique (100, 100B) pour la mise en oeuvre de la communication par une ligne électrique (700) avec un autre dispositif de communication par ligne électrique (100, 100A), le dispositif de communication par ligne électrique (100, 100B) comprenant:
une partie de communication (20) pour la transmission/ réception d'un signal au/ de l'autre dispositif de communication par ligne (100, 100A) et
un indicateur (105) et
une unité de contrôle (10) pour la mise en oeuvre du procès d'authentification, en précisant que le procès d'authentification comprend une transmission d'un signal de requête d'authentification par la partie de communication (20) pour une requête pour démarrer le procès d'authentification pour partager une clé cryptographique d'une communication cryptée, qui est mise en oeuvre entre le dispositif de communication par ligne électrique (100, 100 B) et l'autre dispositif de communication par ligne électrique (100, 100A), une réception d'un signal de réponse d'authentification par la partie de communication (20), qui indique une réception du signal de requête d'authentification, de la part de l'autre dispositif de communication par ligne électrique (100, 100A), une réception de la clé cryptographique de l'autre dispositif de communication par ligne électrique (100, 100A) par la partie de communication (20), en précisant que l'unité de contrôle (10) est en précisant que l'unité de contrôle (10) est en outre conçue pour recevoir ensuite par la partie de communication (20) de la part de l'autre dispositif de communication par ligne électrique (100, 100B) un signal de confirmation de l'enregistrement comme une requête pour un affichage qui confirme un statut d'enregistrement, en précisant que le statut d'enregistrement indique, si le procès d'authentification est achevé, en précisant que dans les cas d'un procès d'authentification achevé le dispositif de communication par ligne électrique (100, 100B) peut mettre en oeuvre la communication cryptée en utilisant la clé cryptographique, et en précisant que l'unité de contrôle (10) est conçue pour permettre à l'indicateur (105) d'indiquer conformément au signal de confirmation de l'enregistrement, que la communication cryptée peut être mis en oeuvre avec l'autre dispositif de communication par ligne électrique (100, 100A) en utilisant la clé cryptographique.

6. Système de communication par ligne électrique avec un premier dispositif de communication par ligne électrique (100, 100A) selon l'une quelconque des revendications 1 à 4 et un deuxième dispositif de communication par ligne électrique (100, 100B) selon la revendication 5, lesquels communiquent entre eux par une ligne électrique (700).

7. Procédé de confirmation du statut de l'enregistrement pour confirmer un statut de l'enregistrement d'un dispositif de communication par ligne électrique (100, 100A) avec un autre dispositif de communication par ligne électrique (100, 100B), qui est communiqué par une ligne électrique (700), le procédé de confirmation du statut de l'enregistrement comprenant:
un procès d'authentification, le procès d'authentification comprenant:
une étape de réception du signal de requête d'authentification (S804) consistant en la réception d'un signal de requête d'authentification pour une requête pour démarrer le procès d'authentification pour le partage d'une clé cryptographique d'une communication cryptée qui est mise en oeuvre avec l'autre dispositif de communication par ligne électrique (100, 100B),
une étape de transmission du signal de réponse d'authentification (S805) consistant en la transmission du signal de réponse d'authentification à l'autre dispositif de communication par ligne électrique (100, 100B), qui indique une réception du signal de requête d'authentification,
une étape de génération de la clé cryptographique consistant en la génération de la clé cryptographique et une étape de transmission de la clé cryptographique consistant en la transmission de la clé cryptographique à l'autre dispositif de communication par ligne électrique (100, 100B),
en précisant que le procédé de confirmation du statut de l'enregistrement après le procès d'authentification comprend:
une étape de transmission du signal de confirmation de l'enregistrement (S1402) consistant en la transmission d'un signal de confirmation de l'enregistrement à l'autre dispositif de communication par ligne électrique (100, 100B), pour déterminer l'autre dispositif de communication par ligne électrique (100, 100B) à prévoir un affichage qui confirme un statut d'enregistrement, en précisant que le statut d'enregistrement indique, si le procès d'authentification est achevé, en précisant que dans les cas d'un procès d'authentification achevé l'autre dispositif de communication par ligne électrique (100, 100B) peut mettre en oeuvre la communication cryptée en utilisant la clé cryptographique.

8. Procédé de confirmation du statut de l'enregistrement pour confirmer un statut de l'enregistrement d'un dispositif de communication par ligne électrique (100, 100B) avec un autre dispositif de communication par ligne électrique (100, 100A), qui est communiqué par une ligne électrique (700), le procédé de confirmation du statut de l'enregistrement comprenant:
un procès d'authentification, le procès d'authentification comprenant:
une étape de transmission du signal de requête d'authentification (S903) consistant en la transmission d'un signal de requête d'authentification pour une requête pour démarrer le procès d'authentification pour le partage d'une clé cryptographique d'une communication cryptée qui est mise en oeuvre avec l'autre dispositif de communication par ligne électrique (100, 100A),
une étape de réception du signal de réponse d'authentification (S904) consistant en la réception d'un signal de réponse d'authentification qui indique une réception du signal de requête d'authentification, de la part de l'autre dispositif de communication par ligne électrique (100, 100A) et
une étape de réception de la clé cryptographique de consistant en la réception de la clé cryptographique,
en précisant que le procédé de confirmation du statut de l'enregistrement après le procès d'authentification comprend:
une étape de réception du signal de confirmation de l'enregistrement (S1411) consistant en la réception du signal de confirmation de l'enregistrement de l'autre dispositif de communication par ligne électrique (100, 100A) comme une requête pour un affichage qui confirme un statut d'enregistrement, en précisant que le statut d'enregistrement indique, si le procès d'authentification est achevé, en précisant que dans les cas d'un procès d'authentification achevé la communication cryptée peut être mise en oeuvre en utilisant la clé cryptographique, et
une étape d'affichage (S1403) consistant en l'affichage conformément au signal de confirmation de l'enregistrement, que la communication cryptée peut être mise en oeuvre avec l'autre dispositif de communication par ligne électrique (100, 100A) en utilisant la clé cryptographique.

9. Procédé de confirmation du statut de l'enregistrement pour confirmer un statut de l'enregistrement entre un premier dispositif de communication par ligne électrique (100, 100A) et un deuxième dispositif de communication par ligne électrique (100, 100B)qui communiquent entre eux par une ligne électrique (700), en précisant que le procédé de confirmation du statut de l'enregistrement présente les étapes du procédé de confirmation du statut de l'enregistrement de la revendication 7, qui sont mises en oeuvre par le premier dispositif de communication par ligne électrique (100, 100A), et les étapes du procédé de confirmation du statut de l'enregistrement selon la revendication 8, qui sont mises en oeuvre par le deuxième dispositif de communication par ligne électrique (100, 100B).

10. Procédé de confirmation du statut de l'enregistrement selon la revendication 9,
en précisant que plusieurs deuxièmes dispositifs de communication par ligne électrique sont prévus,
en précisant que l'étape de réception du signal de requête d'authentification (S804) présente une réception du signal de requête d'authentification de l'un des plusieurs deuxièmes dispositifs de communication par ligne électrique (100, 100B),
en précisant que l'étape de génération de la clé cryptographique présente un stockage d'information qui est unique pour le deuxième dispositif de communication par ligne électrique (100, 100B) qui a transmis le signal de requête d'authentification, et
en précisant que l'étape de transmission du signal de confirmation de l'enregistrement (S1402) comprend une transmission des signaux de confirmation de l'enregistrement aux plusieurs deuxièmes dispositifs de communication par ligne électrique (100, 100B) sur la base de l'information qui est unique pour les plusieurs deuxièmes dispositifs de communication par ligne électrique (100, 100B) et qui est stockée dans le premier dispositif de communication par ligne électrique (100, 100A).

11. Procédé de confirmation du statut de l'enregistrement selon la revendication 10,
en précisant que le premier dispositif de communication par ligne électrique (100, 100A) présente de l'information qui indique le nombre des dispositifs de communication par ligne électrique (100, 100B) qui partagent la clé cryptographique, sur la base de l'information qui est unique pour les plusieurs deuxièmes dispositifs de communication par ligne électrique (100, 100B) et qui est stockée dans le premier dispositif de communication par ligne électrique (100, 100A).

12. Procédé de confirmation du statut de l'enregistrement selon l'une quelconque des revendications 9 à 11,
en précisant que l'étape de transmission du signal de confirmation de l'enregistrement (S1402) comprend une transmission du signal de confirmation de l'enregistrement, si le premier dispositif de communication par ligne électrique (100, 100A) est manié, après que la clé cryptographique a été transmise.
